# EUROPEAN PATENT APPLICATION

(11) **EP 4 236 472 A1**
(43) Date of publication of application: **30.08.2023**
(21) Application number: 20961823.0
(22) Date of filing: 17.11.2020
(51) Int. Cl.: H04W 40/34, H04W 40/02

(54) **CONNECTION METHOD AND RELATED APPARATUS**

(71) Applicant: Huawei Technologies Co., Ltd., Shenzhen, Guangdong 518129 (CN)
(72) Inventor: YANG, Mingyue, Shenzhen, Guangdong 518129 (CN); ZHOU, Runze, Shenzhen, Guangdong 518129 (CN)
(74) Representative: Huawei European IPR
(86) International application number: PCT/CN2020/129413
(87) International publication number: WO 2022/104531

(57) **Abstract**

This application provides a connection method and a related apparatus. The connection method includes: An access network device obtains connection mode preference information of a first terminal device, where the connection mode preference information indicates a connection mode preference of the first terminal device. The access network device sends path switching information to the first terminal device based on the connection mode preference information, where the path switching information is used to switch a connection mode between the first terminal device and the access network device. In this way, a connection mode to which the first terminal device switches can better meet a connection requirement of the first terminal device.

## Description

### TECHNICAL FIELD

This application relates to the field of wireless communication technologies, and in particular, to a connection method and a related apparatus.

### BACKGROUND

A D2D (device-to-device) technology is a technology for direct communication between two terminal devices. In other words, direct communication between the two terminal devices bypasses an access network device.

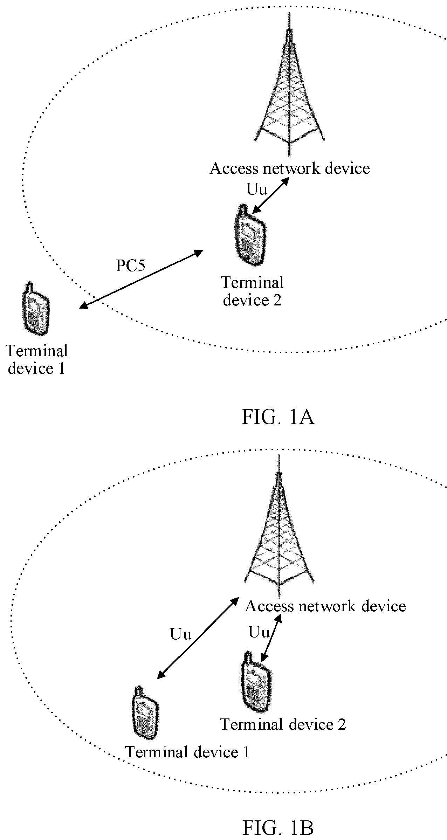

An existing communication protocol supports a network architecture in which a terminal device accesses a network via a relay device. FIG. 1A is a schematic diagram of a network architecture. In the network architecture, a terminal device 1 (which may be referred to as a remote device) located outside a coverage area of a wireless network may use a D2D technology to access the wireless network by connecting to another terminal device 2 (which may be referred to as a relay device) located within the coverage area of the network. That is, the remote device may access the network via the relay device. The relay device is connected to an access network device in the wireless network through a Uu interface, and the remote device is connected to the relay device through a PCS interface.

In a moving process of the terminal device 1, the terminal device 1 moves from a location within the coverage area of the wireless network to a location outside the coverage area of the wireless network, or may move from a location outside the coverage area of the wireless network to a location within the coverage area of the wireless network. In such a moving process, the terminal device switches a connection mode between the terminal device and the access network device.

Refer to a schematic diagram of a network architecture shown in FIG. 1B. In the conventional technology, a solution for switching a connection mode between a terminal device and an access network device is as follows: When a terminal device 1 moves from a location within a coverage area of a wireless network to a location outside the coverage area of the wireless network, a connection mode between the terminal device 1 and the access network device is switched to that the terminal device 1 is directly connected to the access network device in the wireless network through a Uu interface. Further, when the terminal device 1 moves from a location within the coverage area of the wireless network to a location outside the coverage area of the wireless network, a connection mode between the terminal device 1 and the access network device is switched to that the terminal device 1 is connected to a terminal device 2 through a PCS interface, and then is connected to the access network device via the terminal device 2.

However, the terminal device has different connection requirements in different scenarios. In the conventional technology, the solution for switching the connection mode between the terminal device and the access network device cannot better meet the connection requirements of the terminal device.

### SUMMARY

This application provides a connection method and a related apparatus, to better meet a connection requirement of a terminal device.

According to a first aspect, this application provides a connection method, including: An access network device obtains connection mode preference information of a first terminal device, where the connection mode preference information indicates a connection mode preference of the first terminal device; and the access network device sends path switching information to the first terminal device based on the connection mode preference information, where the path switching information is used to switch a connection mode between the first terminal device and the access network device.

In technical solutions of this implementation of this application, the access network device sends the path switching information to the first terminal device based on the connection mode preference information of the first terminal device, and the first terminal device switches a path based on the path switching information. In this way, a connection mode to which the first terminal device switches can better meet a connection requirement of the first terminal device.

The connection mode preference may also be referred to as a connection path preference. The connection mode preference may be understood as a preference of a connection mode of a connection between the first terminal device and an access network, may be understood as a preference of the connection mode of a connection between the first terminal device and the access network device, or may be understood as a connection mode in which the first terminal device is allowed to be connected to the access network device.

Specifically, the connection mode preference includes: Uu interface and PCS interface dual connectivity; Uu interface single connectivity; or PCS interface single connectivity. In this way, an appropriate connection mode preference can be determined based on the actual connection requirement of the first terminal device.

Specifically, the Uu interface single connectivity means that the first terminal device is connected to the access network device in a connection mode of the Uu interface single connectivity.

The PCS interface single connectivity means that the first terminal device is connected to a relay device in a connection mode of the PCS interface single connectivity, and the relay device is connected to the access network device. A Uu interface connection may be established between the relay device and the access network device.

The Uu interface and PCS interface dual connectivity means that the first terminal device is connected to the access network device in a Uu interface connection mode, and the first terminal device is connected to the access network device in a PCS interface connection mode.

In some implementations, that the access network device sends path switching information to the first terminal device based on the connection mode preference information includes:

When the connection mode preference is a Uu interface and PCS interface dual connectivity, if the connection mode currently used between the first terminal device and the access network device is a PCS interface single connectivity, and a signal of a Uu interface of the first terminal device meets a first preset condition, the access network device determines to switch the connection mode between the first terminal device and the access network device to the Uu interface and PCS interface dual connectivity; and
the access network device sends the path switching information to the first terminal device, where the path switching information includes first indication information, and the first indication information indicates the first terminal device to establish a Uu interface connection to the access network device, and maintain a PCS interface connection to the relay device.

In this embodiment of this application, the first preset condition may be based on at least one of the following: a signal strength, signal quality, or a signal-to-noise ratio.

For example, the first preset condition may be one of the following:
A signal strength of the Uu interface is greater than or equal to a first strength threshold; a signal strength of the Uu interface is greater than a first strength threshold; signal quality of the Uu interface is greater than or equal to a first quality threshold; signal quality of the Uu interface is greater than a first quality threshold; a signal-to-noise ratio of the Uu interface is greater than or equal to a first signal-to-noise ratio threshold; or a signal-to-noise ratio of the Uu interface is greater than a first signal-to-noise ratio threshold.

It is clear that the first preset condition may be based on two or three of the signal quality, the signal strength, and the signal-to-noise ratio. This is not limited.

In this way, when moving from a location within a coverage area of a wireless network to a location outside the coverage area of the wireless network, the first terminal device can switch to the Uu interface and PCS interface dual connectivity based on the first indication information, and can continue to transmit service data that not completely transmitted through a PCS interface, and can further transmit data through the Uu interface. This can ensure service continuity. Such a connection mode can meet a requirement of a service that has a high continuity requirement.

Optionally, before the access network device determines to switch the connection mode between the first terminal device and the access network device to the Uu interface and PCS interface dual connectivity, the method further includes: The access network device determines, based on path support capability information of the first terminal device, that the first terminal device supports the Uu interface and PCS interface dual connectivity.

In this way, before indicating the first terminal device to perform the Uu interface and PCS interface dual connectivity, the access network device can first determine the Uu interface and PCS interface dual connectivity of the first terminal device. This can avoid a case in which the first terminal device cannot perform the Uu interface and PCS interface dual connectivity based on the first indication information after the access network device sends the first indication information to the first terminal device.

In some implementations, that the access network device sends path switching information to the first terminal device based on the connection mode preference information includes:

When the connection mode preference is the Uu interface and PCS interface dual connectivity, if the connection mode currently used between the first terminal device and the access network device is the Uu interface and PCS interface dual connectivity, and a signal of a Uu interface of the first terminal device meets a second preset condition, the access network device determines to switch the connection mode between the first terminal device and the access network device to the PCS interface single connectivity; and
the access network device sends the path switching information to the first terminal device, where the path switching information includes second indication information, and the second indication information indicates the first terminal device to release a Uu interface connection to the access network device, and maintain a PCS interface connection to the relay device.

The second preset condition may be based on at least one of the following: a signal strength, signal quality, or a signal-to-noise ratio.

For example, the second preset condition may be one of the following:
A signal strength of the Uu interface is less than or equal to a first strength threshold; a signal strength of the Uu interface is less than a first strength threshold; signal quality of the Uu interface is less than or equal to a first quality threshold; signal quality of the Uu interface is less than a first quality threshold; a signal-to-noise ratio of the Uu interface is less than or equal to a first signal-to-noise ratio threshold; or a signal-to-noise ratio of the Uu interface is less than a first signal-to-noise ratio threshold.

Specifically, if a first preset condition is that the signal strength of the Uu interface is greater than or equal to the first strength threshold, the second preset condition may be that the signal strength of the Uu interface is less than the first strength threshold. If a first preset condition is that the signal strength of the Uu interface is greater than the first strength threshold, the second preset condition may be that the signal strength of the Uu interface is less than or equal to the first strength threshold.

If a first preset condition is that the signal quality of the Uu interface is greater than or equal to the first quality threshold, the second preset condition may be that the signal quality of the Uu interface is less than the first quality threshold. If a first preset condition is that the signal quality of the Uu interface is greater than the first quality threshold, the second preset condition may be that the signal quality of the Uu interface is less than or equal to the first quality threshold.

If a first preset condition is that the signal-to-noise ratio of the Uu interface is greater than or equal to the first signal-to-noise ratio threshold, the second preset condition may be that the signal-to-noise ratio of the Uu interface is less than the first signal-to-noise ratio threshold. If a first preset condition is that the signal-to-noise ratio of the Uu interface is greater than the first signal-to-noise ratio threshold, the second preset condition may be that the signal-to-noise ratio of the Uu interface is less than or equal to the first signal-to-noise ratio threshold.

It is clear that the second preset condition may be based on two or three of the signal quality, the signal strength, and the signal-to-noise ratio. This is not limited.

In this way, when moving from a location within a coverage area of a wireless network to a location outside the coverage area of the wireless network, the first terminal device can switch to the PCS interface single connectivity based on the second indication information. This can avoid data transmission interruption caused by a weak signal strength of the Uu interface. Therefore, a data transmission success probability is improved.

In some implementations, that the access network device sends path switching information to the first terminal device based on the connection mode preference information includes:
when the connection mode preference is the Uu interface single connectivity, if the connection mode currently used between the first terminal device and the access network device is the PCS interface single connectivity, and a signal of a Uu interface of the first terminal device meets a first preset condition, the access network device determines to switch the connection mode between the first terminal device and the access network device to the Uu interface single connectivity; and
the access network device sends the path switching information to the first terminal device, where the path switching information includes third indication information, and the third indication information indicates the first terminal device to establish a Uu interface connection to the access network device, and release a PCS interface connection to the relay device.

In this way, when moving from a location within a coverage area of a wireless network to a location outside the coverage area of the wireless network, the first terminal device can switch to the Uu interface single connectivity based on the third indication information. This can improve data transmission efficiency. Such a connection mode can meet a requirement of a service that has high data transmission efficiency.

In some implementations, that the access network device sends path switching information to the first terminal device based on the connection mode preference information includes:
when the connection mode preference is the Uu interface single connectivity, if the connection mode currently used between the first terminal device and the access network device is the Uu interface single connectivity, and a signal of a Uu interface of the first terminal device meets a second preset condition, the access network device determines to switch the connection mode between the first terminal device and the access network device to the PCS interface single connectivity; and
the access network device sends the path switching information to the first terminal device, where the path switching information includes fourth indication information, and the fourth indication information indicates the first terminal device to establish a PCS interface connection to the relay device and release a Uu interface connection to the access network device.

In this way, when moving from a location within a coverage area of a wireless network to a location outside the coverage area of the wireless network, the first terminal device can switch to the PCS interface single connectivity based on the fourth indication information. This can avoid data transmission interruption caused by a weak signal strength of the Uu interface. Therefore, a data transmission success probability is improved.

In some implementations, that an access network device obtains connection mode preference information of a first terminal device includes:
The access network device receives the connection mode preference information from a first network device, where the first network device is an access and mobility management function device or a session management device. In this way, the access network device can obtain the connection mode preference information from the first network device.

In some implementations, that an access network device obtains connection mode preference information of a first terminal device includes: The access network device receives the connection mode preference information from the first terminal device. In this way, the access network device can obtain the connection mode preference information from the first terminal device.

Optionally, the connection mode preference information is carried in a measurement report. In this way, the first terminal device sends the connection mode preference information to the access network device by including the connection mode preference information in the measurement report. This can reduce signaling overheads. For example, the first terminal device may send the measurement report to the access network device, where the measurement report includes the connection mode preference information.

According to a second aspect, an implementation of this application further provides a connection method, including: A first network device obtains connection mode preference information of a first terminal device, where the connection mode preference information indicates a connection mode preference of the first terminal device; and the first network device sends the connection mode preference information to an access network device.

In this way, the access network device can indicate, based on the connection mode preference information, the first terminal device to switch a connection mode. Therefore, a connection mode to which the first terminal device switches better meets a connection requirement of the first terminal device.

In some implementations, that a first network device obtains connection mode preference information of a first terminal device includes:

The first network device obtains subscription data of the first terminal device; and
the first network device obtains the connection mode preference information based on the subscription data of the first terminal device.

In this way, the first network device can obtain the connection mode preference information of the first terminal device from the subscription data of the first terminal device, and send the connection mode preference information to the access network device, so that the access network device can send path switching information to a terminal device based on the connection mode preference information of the first terminal device.

In some implementations, the first network device is an access and mobility management function device, and before the first network device obtains the connection mode preference information of the first terminal device, the method further includes:
The access and mobility management function device receives a registration request from the first terminal device, where the registration request includes path support capability information of the first terminal device.

The path support capability information indicates that the first terminal device supports one or more of the following: Uu interface and PCS interface dual connectivity, Uu interface single connectivity, or PCS interface single connectivity.

In this way, the access and mobility management function device can obtain the path support capability information of the first terminal device, and provide the path support capability information for the access network device, so that the access network device can determine a connection capability of the first terminal device based on the path support capability information, and indicate, based on the connection capability and the connection mode preference of the first terminal device, the first terminal device to switch the connection mode.

According to a third aspect, an implementation of this application further provides a connection method, including:

A first terminal device determines a connection mode preference; and
the first terminal device sends connection mode preference information to an access network device, where the connection mode preference information indicates the connection mode preference of the first terminal device.

In this way, the first terminal device determines the connection mode preference, and sends, to the access network device, the connection mode preference information indicating the connection mode preference, so that the access network device can indicate, based on the connection mode preference determined by the first terminal device, the first terminal device to switch a connection mode. Therefore, the connection mode of the first terminal device can better meet a connection requirement of the first terminal device.

Optionally, the connection mode preference information is carried in a measurement report. This helps reduce signaling overheads.

In some implementations, the method further includes: The first terminal device sends a registration request to an access and mobility management function device, where the registration request includes path support capability information of the first terminal device.

The path support capability information indicates that the first terminal device supports one or more of the following: Uu interface and PCS interface dual connectivity, Uu interface single connectivity, or PCS interface single connectivity.

In this way, the access and mobility management function device can obtain the path support capability information of the first terminal device, and provide the path support capability information for the access network device, so that the access network device can determine a connection capability of the first terminal device based on the path support capability information, and indicate, based on the connection capability and the connection mode preference of the first terminal device, the first terminal device to switch the connection mode.

In some implementations, that the first terminal device determines connection mode preference includes: The first terminal device determines the connection mode preference based on one or two of a service scenario and an expected movement track.

In some implementations, the method further includes:

The first terminal device receives path switching information from the access network device; and
the first terminal device switches a connection mode between the first terminal device and the access network device based on the path switching information.

The path switching information includes first indication information, and the first indication information indicates the first terminal device to establish a Uu interface connection to the access network device, and maintain a PCS interface connection to a relay device.

Alternatively, the path switching information includes second indication information, and the second indication information indicates the first terminal device to release a Uu interface connection to the access network device, and maintain a PCS interface connection to a relay device.

Alternatively, the path switching information includes third indication information, and the third indication information indicates the first terminal device to establish a Uu interface connection to the access network device, and release a PCS interface connection to a relay device.

Alternatively, the path switching information includes fourth indication information, and the fourth indication information indicates the first terminal device to establish a PCS interface connection to a relay device, and release a Uu interface connection to the access network device.

According to a fourth aspect, an implementation of this application provides a connection apparatus. The connection apparatus may be an access network device, or may be deployed on an access network device. The connection apparatus includes a receiving unit and a sending unit.

The receiving unit is configured to obtain connection mode preference information of a first terminal device, where the connection mode preference information indicates a connection mode preference of the first terminal device.

The sending unit is configured to send path switching information to the first terminal device based on the connection mode preference information, where the path switching information is used to switch a connection mode between the first terminal device and the access network device.

In technical solutions of this implementation of this application, the connection apparatus sends the path switching information to the first terminal device based on the connection mode preference information of the first terminal device, and the first terminal device switches a path based on the path switching information. In this way, a connection mode to which the first terminal device switches can better meet a connection requirement of the first terminal device.

In some implementations, the connection mode preference includes: Uu interface and PCS interface dual connectivity; Uu interface single connectivity; or PCS interface single connectivity.

In some implementations, in an aspect of sending the path switching information to the first terminal device based on the connection mode preference information, the sending unit 802 is specifically configured to: when the connection mode preference is the Uu interface and PCS interface dual connectivity, if the connection mode currently used between the first terminal device and the access network device is the PCS interface single connectivity, and a signal of a Uu interface of the first terminal device meets a first preset condition, determine to switch the connection mode between the first terminal device and the access network device to the Uu interface and PCS interface dual connectivity; and
send the path switching information to the first terminal device, where the path switching information includes first indication information, and the first indication information indicates the first terminal device to establish a Uu interface connection to the access network device, and maintain a PCS interface connection to a relay device.

In some implementations, the connection apparatus further includes a processor, and the processor is configured to determine, based on path support capability information of the first terminal device, that the first terminal device supports the Uu interface and PCS interface dual connectivity.

In some implementations, in an aspect of sending the path switching information to the first terminal device based on the connection mode preference information, the sending unit is specifically configured to:
when the connection mode preference is the Uu interface and PCS interface dual connectivity, if the connection mode currently used between the first terminal device and the access network device is the Uu interface and PCS interface dual connectivity, and a signal of a Uu interface of the first terminal device meets a second preset condition, determine to switch the connection mode between the first terminal device and the access network device to the PCS interface single connectivity; and
send the path switching information to the first terminal device, where the path switching information includes second indication information, and the second indication information indicates the first terminal device to release a Uu interface connection to the access network device, and maintain a PCS interface connection to a relay device.

In some implementations, in an aspect of sending the path switching information to the first terminal device based on the connection mode preference information, the sending unit is specifically configured to:
when the connection mode preference is the Uu interface single connectivity, if the connection mode currently used between the first terminal device and the access network device is the PCS interface single connectivity, and a signal of a Uu interface of the first terminal device meets a first preset condition, determine to switch the connection mode between the first terminal device and the access network device to the Uu interface single connectivity; and
send the path switching information to the first terminal device, where the path switching information includes third indication information, and the third indication information indicates the first terminal device to establish a Uu interface connection to the access network device, and release a PCS interface connection to a relay device.

In some implementations, in an aspect of sending the path switching information to the first terminal device based on the connection mode preference information, the sending unit is specifically configured to:
when the connection mode preference is the Uu interface single connectivity, if the connection mode currently used between the first terminal device and the access network device is the Uu interface single connectivity, and a signal of a Uu interface of the first terminal device meets a second preset condition, determine to switch the connection mode between the first terminal device and the access network device to the PCS interface single connectivity; and
send the path switching information to the first terminal device, where the path switching information includes fourth indication information, and the fourth indication information indicates the first terminal device to establish a PCS interface connection to a relay device, and release a Uu interface connection to the access network device.

In some implementations, in an aspect of obtaining the connection mode preference information of the first terminal device, the receiving unit is specifically configured to receive the connection mode preference information from a first network device, where the first network device is an access and mobility management function device or a session management device.

In some implementations, in an aspect of obtaining the connection mode preference information of the first terminal device, the receiving unit is specifically configured to receive the connection mode preference information from the first terminal device.

Optionally, the connection mode preference information is carried in a measurement report.

It should be understood that related supplementary descriptions and beneficial effects of the connection method in the implementations of this application are also applicable to the connection apparatus in the implementations of this application. To avoid redundancy, details are not described herein again.

According to a fifth aspect, an implementation of this application further provides a connection apparatus. The connection apparatus may be a first network device, or may be deployed on a first network device. The first network device may be but is not limited to an access and mobility management function device or a session management device. The connection apparatus includes a receiving unit and a sending unit.

The receiving unit is configured to obtain connection mode preference information of a first terminal device, where the connection mode preference information indicates a connection mode preference of the first terminal device.

The sending unit is configured to send the connection mode preference information to an access network device.

In this way, the access network device can indicate, based on the connection mode preference information, the first terminal device to switch a connection mode. Therefore, a connection mode to which the first terminal device switches better meets a connection requirement of the first terminal device.

In some implementations, in an aspect of obtaining the connection mode preference information of the first terminal device, the receiving unit 901 is specifically configured to:
obtain subscription data of the first terminal device; and obtain the connection mode preference information based on the subscription data of the first terminal device.

In some implementations, the receiving unit is further configured to:
receive a registration request from the first terminal device, where the registration request includes path support capability information of the first terminal device.

The path support capability information indicates that the first terminal device supports one or more of the following: Uu interface and PCS interface dual connectivity, Uu interface single connectivity, or PCS interface single connectivity.

It should be understood that related supplementary descriptions and beneficial effects of the connection method in the implementations of this application are also applicable to the connection apparatus in the implementations of this application. To avoid redundancy, details are not described herein again.

According to a sixth aspect, an implementation of this application further provides a connection apparatus. The connection apparatus may be a first terminal device, or may be deployed on a first terminal device. The connection apparatus includes a processing unit and a sending unit.

The processing unit is configured to determine a connection mode preference.

The sending unit is configured to send connection mode preference information to an access network device, where the connection mode preference information indicates the connection mode preference of the first terminal device.

In this way, the first terminal device determines the connection mode preference, and sends, to the access network device, the connection mode preference information indicating the connection mode preference, so that the access network device can indicate, based on the connection mode preference determined by the first terminal device, the first terminal device to switch a connection mode. Therefore, the connection mode of the first terminal device can better meet a connection requirement of the first terminal device.

Optionally, the connection mode preference information is carried in a measurement report or a registration request.

In some implementations, the sending unit is further configured to:
send the registration request to an access and mobility management function device, where the registration request includes path support capability information of the first terminal device.

The path support capability information indicates that the first terminal device supports one or more of the following: Uu interface and PCS interface dual connectivity, Uu interface single connectivity, or PCS interface single connectivity.

In some implementations, in an aspect of determining the connection mode preference information, the processing unit 1001 is specifically configured to determine the connection mode preference information based on one or two of a service scenario and an expected movement track.

In some implementations, the connection apparatus further includes:
a receiving unit, configured to receive path switching information from the access network device.

The processing unit is further configured to switch a connection mode between the first terminal device and the access network device based on the path switching information.

The path switching information includes first indication information, and the first indication information indicates the first terminal device to establish a Uu interface connection to the access network device, and maintain a PCS interface connection to a relay device.

Alternatively, the path switching information includes second indication information, and the second indication information indicates the first terminal device to release a Uu interface connection to the access network device, and maintain a PCS interface connection to a relay device.

Alternatively, the path switching information includes third indication information, and the third indication information indicates the first terminal device to establish a Uu interface connection to the access network device, and release a PCS interface connection to a relay device.

Alternatively, the path switching information includes fourth indication information, and the fourth indication information indicates the first terminal device to establish a PCS interface connection to a relay device, and release a Uu interface connection to the access network device.

It should be understood that related supplementary descriptions and beneficial effects of the connection method in the implementations of this application are also applicable to the connection apparatus in the implementations of this application. To avoid redundancy, details are not described herein again.

According to a seventh aspect, this application provides a communication device. The communication device includes a processor, and the processor is coupled to a memory. When the processor executes a computer program or instructions in the memory, the method according to any one of the implementations of the first aspect is performed.

Optionally, the apparatus further includes the memory.

Optionally, the apparatus further includes a communication interface, and the processor is coupled to the communication interface.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

In an implementation, the communication device is a first terminal device, an access network device, or a first network device. When the communication device is the first terminal device, the access network device, or the first network device, the communication interface may be a transceiver or an input/output interface. Optionally, the transceiver may be a transceiver circuit. Optionally, the input/output interface may be an input/output circuit.

In another implementation, the communication device is a chip or a chip system. When the apparatus is the chip or the chip system, the communication interface may be an input/output interface, an interface circuit, an output circuit, an input circuit, a pin, a related circuit, or the like on the chip or in the chip system. The processor may alternatively be embodied as a processing circuit or a logic circuit.

According to an eighth aspect, this application provides a communication system. The communication system includes the connection apparatus in the fourth aspect, the connection apparatus in the fifth aspect, and the connection apparatus in the sixth aspect; or the communication system includes the first terminal device, the access network device, and the first network device.

According to a ninth aspect, this application provides a computer program product. The computer program product includes a computer program (which may also be referred to as code or instructions). When the computer program is run, a computer is enabled to perform the method according to any one of the possible implementations of the first aspect, the second aspect, or the third aspect.

According to a tenth aspect, this application provides a computer-readable storage medium. The computer-readable storage medium stores a computer program (which may also be referred to as code or instructions). When the computer program is run on a computer, the computer is enabled to perform the method according to any one of the possible implementations of the first aspect, the second aspect, or the third aspect.

According to an eleventh aspect, this application further provides a chip, including a processor and an interface, configured to execute a computer program or instructions stored in a memory, to perform the method according to any one of the possible implementations of the first aspect to the third aspect.

### BRIEF DESCRIPTION OF DRAWINGS

To describe technical solutions of embodiments of this application or in the conventional technology more clearly, the following briefly describes the accompanying drawings used in describing embodiments.
FIG. 1A is a schematic diagram of a network architecture;
FIG. 1B is a schematic diagram of another network architecture;
FIG. 2A is a diagram of an architecture of a communication system;
FIG. 2B is a diagram of an architecture of another communication system;
FIG. 3A is a schematic flowchart of a connection method according to an embodiment of this application;
FIG. 3B is another schematic flowchart of a connection method according to an embodiment of this application;
FIG. 3C is another schematic flowchart of a connection method according to an embodiment of this application;
FIG. 3D is another schematic flowchart of a connection method according to an embodiment of this application;
FIG. 3E is another schematic flowchart of a connection method according to an embodiment of this application;
FIG. 3F is another schematic flowchart of a connection method according to an embodiment of this application;
FIG. 3G is another schematic flowchart of a connection method according to an embodiment of this application;
FIG. 4A is a schematic diagram of a scenario related to a connection method according to an embodiment of this application;
FIG. 4B is a schematic diagram of another scenario related to a connection method according to an embodiment of this application;
FIG. 4C is a schematic diagram of another scenario related to a connection method according to an embodiment of this application;
FIG. 4D is a schematic diagram of another scenario related to a connection method according to an embodiment of this application;
FIG. 4E is a schematic diagram of another scenario related to a connection method according to an embodiment of this application;
FIG. 5A is a schematic flowchart of a connection method according to another embodiment of this application;
FIG. 5B is a schematic flowchart of a connection method according to another embodiment of this application;
FIG. 5C is a schematic flowchart of a connection method according to another embodiment of this application;
FIG. 6A is a schematic flowchart of a connection method according to another embodiment of this application;
FIG. 6B is a schematic flowchart of a connection method according to another embodiment of this application;
FIG. 6C is a schematic flowchart of a connection method according to another embodiment of this application;
FIG. 6D is a schematic flowchart of a connection method according to another embodiment of this application;
FIG. 6E is a schematic flowchart of a connection method according to another embodiment of this application;
FIG. 6F is a schematic flowchart of a connection method according to another embodiment of this application;
FIG. 6G is a schematic flowchart of a connection method according to another embodiment of this application;
FIG. 7A is a schematic flowchart of a connection method according to another embodiment of this application;
FIG. 7B is a schematic flowchart of a connection method according to another embodiment of this application;
FIG. 7C is a schematic flowchart of a connection method according to another embodiment of this application;
FIG. 7D is a schematic flowchart of a connection method according to another embodiment of this application;
FIG. 7E is a schematic flowchart of a connection method according to another embodiment of this application;
FIG. 8 is a schematic flowchart of a connection method according to another embodiment of this application;
FIG. 9 is a schematic flowchart of a connection method according to another embodiment of this application;
FIG. 10 is a schematic diagram of a structure of a connection apparatus according to an embodiment of this application;
FIG. 11 is a schematic diagram of a structure of another connection apparatus according to an embodiment of this application;
FIG. 12 is a schematic diagram of a structure of another connection apparatus according to an embodiment of this application;
FIG. 13 is a schematic diagram of a structure of a communication device according to an embodiment of this application;
FIG. 14 is a schematic diagram of a structure of a chip according to an embodiment of this application;
FIG. 15 is a schematic diagram of an architecture of a communication system according to an embodiment of this application; and
FIG. 16 is a schematic diagram of another architecture of a communication system according to an embodiment of this application.

### DESCRIPTION OF EMBODIMENTS

The technical solutions according to embodiments of this application are clearly and completely described in the following with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of means two or more than two.

The technical solutions of embodiments of this application may be applied to various communication systems, for example, an enhanced long term evolution (enhanced long term evolution, eLTE) system, a 5th generation (5th generation, 5G) system, or new radio (new radio, NR). The 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a sixth generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (Internet of Things, IoT) communication system, or another communication system.

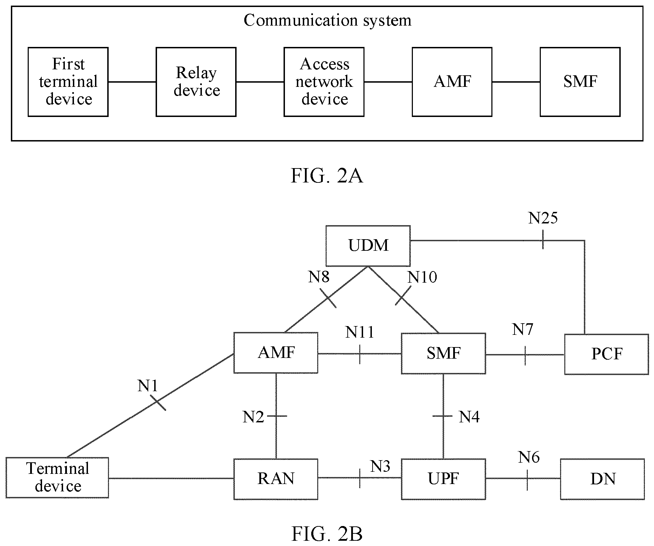

FIG. 2A is a diagram of an architecture of a communication system. As shown in FIG. 2A, the communication system includes an access network device, a first terminal device (which may be referred to as a remote device), and a relay device. Optionally, the communication system may further include an access and mobility management function (access and mobility management function, AMF) device and a session management (session management function, SMF) device.

In this application, an AMF device is referred to as an AMF for short, and an SMF device is referred to as an SMF for short.

FIG. 2B is a diagram of an architecture of another communication system. The communication system may be a reference point-based non-roaming architecture in a fifth generation mobile communication network. The communication system in embodiments of this application may be used in but is not limited to the reference point-based non-roaming architecture in the fifth generation mobile communication network shown in FIG. 2B. The communication network mainly includes an AMF, an SMF, a user plane function (user plane function, UPF) device, and a unified data management (unified data management, UDM) device. Optionally, the communication network may further include a policy control function (policy control function, PCF) device, a data network (data network, DN).

In this application, the UPF device is referred to as a UPF for short, the PCF device is referred to as a PCF for short, and the UDM device is referred to as a UDM for short.

The foregoing devices and network elements may directly communicate with each other, or may communicate with each other through forwarding by another device or network element. This is not specifically limited in embodiments of this application. Although not shown, the communication system may further include another network element. This is not specifically limited in embodiments of this application.

Optionally, the first terminal device and/or the relay device in embodiments of this application each are/is a terminal device. The first terminal device and/or the relay device in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function, another processing device connected to a wireless modem, a vehicle-mounted device, a wearable device, a terminal in a future 5G network, a terminal in a future evolved PLMN, a terminal in a future internet of vehicles, or the like. This is not limited in embodiments of this application.

The first terminal device and/or the relay device may be a mobile phone, a tablet computer, a computer having a wireless transceiver function, a virtual reality terminal, an augmented reality terminal, a wireless terminal in industrial control, a wireless terminal in self-driving, a wireless terminal in telemedicine, a wireless terminal in a smart grid, a wireless terminal in transportation safety, a wireless terminal in a smart city, a wireless terminal in a smart home, or the like. The first terminal device and the relay device may be a same terminal device, or may be different terminal devices. For example, the first terminal device may be the mobile phone, and the relay device may be the wireless terminal in self-driving. For another example, the first terminal device and/or the relay device may be wireless terminals in self-driving.

By way of example and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include fullfeatured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the first terminal device and/or the relay device in embodiments of this application may alternatively be a terminal in an internet of things (internet of things, IoT) system. IoT is an important part of future information technology development. A main technical feature of the IoT is to connect an object to a network by using a communication technology, to implement an intelligent network for human-machine interconnection and thing-thing interconnection. In embodiments of this application, an IoT technology may implement massive connections, deep coverage, and terminal power reducing by using, for example, a narrowband (narrowband, NB) technology.

In addition, in embodiments of this application, the first terminal device and/or the relay device may alternatively include sensors such as an intelligent printer, a train detector, and a gas station. Main functions of the first terminal device and/or the relay device include/includes collecting data (for some terminals), receiving control information and downlink data from an access network device, sending an electromagnetic wave, and transmitting uplink data to the access network device.

The relay device is a terminal device within a service range of the access network device, and the relay device may be connected to the access network device through a Uu interface. The first terminal device may be a terminal device within a service range of the access network device, or may be a terminal device outside the service range of the access network device.

Optionally, the access network device in embodiments of this application is any communication device that has a wireless transceiver function and that is configured to communicate with the terminal. The access network device may include but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB, a TRP, or a TP in the 5G system, or one or a group of (including a plurality of antenna panels) antenna panels of a base station in the 5G system. In addition, the access network device may alternatively be a network node included in the gNB or the TP, for example, a BBU or a distributed unit (distributed unit, DU).

In some deployments, the gNB may include a central unit (central unit, CU) and the DU. In addition, the gNB may alternatively include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer is eventually converted into information at the PHY layer, or is converted from information at the PHY layer. Therefore, in this architecture, high layer signaling such as RRC layer signaling may also be considered as being sent by the DU or sent by the DU and the AAU. It may be understood that the access network device may be a device including one or more of a CU node, a DU node, and an AAU node.

Optionally, the access network device and the terminal device in embodiments of this application may communicate with each other over a licensed spectrum, may communicate with each other over an unlicensed spectrum, or may communicate with each other over both a licensed spectrum and an unlicensed spectrum. The access network device and the terminal may communicate with each other over a spectrum below 6 gigahertz (gigahertz, GHz), may communicate with each other over a spectrum above 6 GHz, or may communicate with each other over both a spectrum below 6 GHz and a spectrum above 6 GHz. Spectrum resources used between the access network device and the terminal device are not limited in embodiments of this application.

Optionally, the first terminal device, the relay device, or the access network device mentioned in embodiments of this application may be deployed on land, for example, including indoor or outdoor and handheld or vehicle-mounted devices, may be deployed on a water surface, or may be deployed on an airplane, a balloon, and an artificial satellite in the air. An application scenario of the first terminal device, the relay device, or the access network device is not limited in embodiments of this application.

Optionally, the first terminal device, the relay device, or the access network device in embodiments of this application includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be the first terminal device, the relay device, the access network device, or a functional module that is in the first terminal device, the relay device, or the access network device and that can invoke and execute the program.

In other words, related functions of the first terminal device, the relay device, or the access network device in embodiments of this application may be implemented by one device, may be jointly implemented by a plurality of devices, or may be implemented by one or more functional modules in one device. This is not specifically limited in embodiments of this application. It may be understood that the function may be a network element in a hardware device, may be a software function running on dedicated hardware, a combination of hardware and software, or a virtualization function instantiated on a platform (for example, a cloud platform).

In this application, the AMF is mainly responsible for signaling processing, for example, functions such as access control, mobility management, attachment and detachment, and gateway selection. When providing a service for a session in a terminal, an AMF entity provides control plane storage resources for the session, to store a session identity, an SMF entity identity associated with the session identity, and the like.

The SMF is mainly responsible for session management, user plane functional entity selection, user plane functional entity redirection, internet protocol (internet protocol, IP) address allocation, bearer establishment, modification, and release, quality of service (quality of service, QoS) control, and the like.

The UDM is configured to manage user subscription data.

The UPF is configured to process a user packet, such as forwarding and charging.

The PCF is configured to provide policies, such as a QoS policy and a slice selection policy, for the AMF and the SMF.

The DN is a carrier network that provides a data transmission service for a user.

The following describes the technical solutions of this application in detail with reference to embodiments and the accompanying drawings.

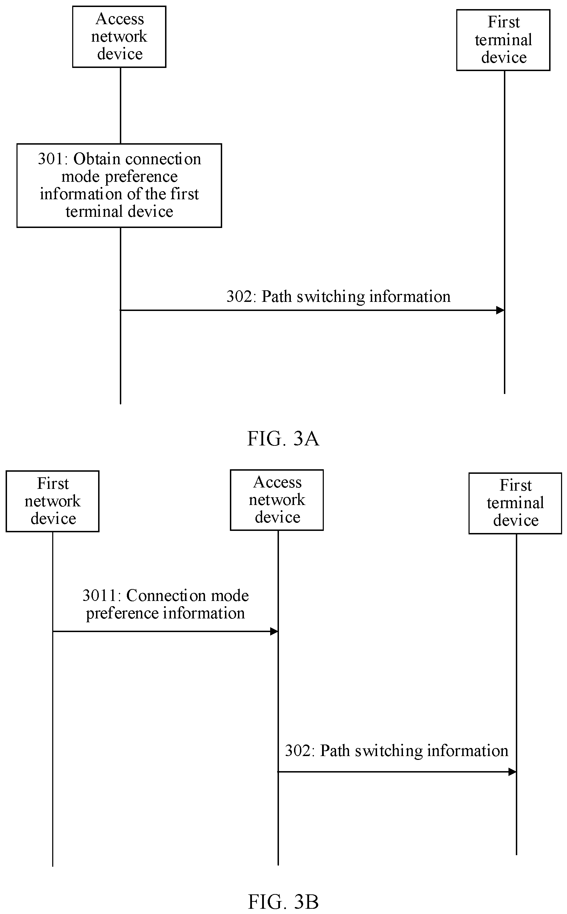

As shown in a schematic flowchart in FIG. 3A, this application provides a connection method. The method is as follows:
301: An access network device obtains connection mode preference information of a first terminal device.

The first terminal device may be referred to as a remote device, to be specific, a device that may communicate with the access network device via a relay device. The relay device may be, but is not limited to, a relay terminal device. The relay device is connected to the access network device.

The connection mode preference information may indicate a connection mode preference of the first terminal device.

The connection mode preference may also be referred to as a connection path preference. The connection mode preference may be understood as a preference of a connection mode or a connection path for connecting the first terminal device to an access network, may be understood as an example connection mode for connecting the first terminal device to an access network device, or may be understood as a connection mode in which the first terminal device is allowed to be connected to an access network device.

Specifically, the connection mode preference may include one or more of Uu interface and PCS interface dual connectivity, Uu interface single connectivity, or PCS interface single connectivity.

The Uu interface single connectivity may mean that the first terminal device is connected to the access network device only in a Uu interface connection mode.

The PCS interface single connectivity may mean that the first terminal device is connected to the access network device via the relay device only in a PCS interface connection mode. To be specific, the first terminal device is connected to the relay device in the PCS interface connection mode, and the relay device is connected to the access network device, so that the first terminal device is connected to the access network device. A Uu interface connection may be established between the relay device and the access network device.

The Uu interface and PCS interface dual connectivity may mean that the first terminal device is connected to the access network device in a Uu interface connection mode, and the first terminal device is further connected to the access network device in a PCS interface connection mode.

For example, that the connection mode preference is the Uu interface and PCS interface dual connectivity may mean that when a signal of a Uu interface of the first terminal device meets a first preset condition, the first terminal device prefers to be connected to the access network device through the Uu interface, and maintain a PCS interface connection to the relay device. The relay device is connected to the access network device. In this way, the first terminal device is connected to the access network device via the relay device, and the first terminal device is connected to the access network device through the Uu interface.

For example, that the connection mode preference is the Uu interface single connectivity may mean that when a signal of a Uu interface of the first terminal device meets a first preset condition, the first terminal device prefers to be connected to the access network device in a connection mode of the Uu interface single connectivity.

For example, that the connection mode preference is the PCS interface single connectivity may mean that, regardless of whether a signal strength of a Uu interface of the first terminal device meets a signal strength requirement of the Uu interface, the first terminal device prefers (or maintains or preferentially uses) being connected to the relay device only through the PCS interface. The relay device is connected to the access network device. In this way, the first terminal device is connected to the access network device via the relay device.

In this embodiment of this application, the first preset condition may be based on at least one of the following: a signal strength, signal quality, or a signal-to-noise ratio.

For example, the first preset condition may be one of the following:
A signal strength of the Uu interface is greater than or equal to a first strength threshold; a signal strength of the Uu interface is greater than a first strength threshold; signal quality of the Uu interface is greater than or equal to a first quality threshold; signal quality of the Uu interface is greater than a first quality threshold; a signal-to-noise ratio of the Uu interface is greater than or equal to a first signal-to-noise ratio threshold; or a signal-to-noise ratio of the Uu interface is greater than a first signal-to-noise ratio threshold.

It is clear that the first preset condition may be based on two or three of the signal quality, the signal strength, and the signal-to-noise ratio. This is not limited.

302: The access network device sends path switching information to the first terminal device based on the connection mode preference information.

The path switching information may be used to switch a connection mode between the first terminal device and the access network device.

Specifically, the path switching information in this application may be a target connection mode between the first terminal device and the access network device, in other words, a connection mode to which the first terminal device is to switch between the first terminal device and the access network device. The target connection mode may be, for example, one of the Uu interface and PCS interface dual connectivity, the Uu interface single connectivity, or the PCS interface single connectivity. The path switching information in this application may alternatively be indication information that indicates the first terminal device to perform a specific action, for example, release a connection, maintain a connection, or establish a connection. The connection may vary based on different connection modes, and may be specifically a PCS interface connection or a Uu interface connection.

Optionally, in step 302, the access network device sends the path switching information to the first terminal device based on the connection mode preference indicated by the connection mode preference information and the current connection mode of the first terminal device.

For example, when the connection mode preference is different from the current connection mode of the first terminal device, if a signal strength of an interface corresponding to the connection mode preference meets a corresponding signal strength requirement, the access network device may send the path switching information to the first terminal device, to indicate the first terminal device to be connected to the access network device in a connection mode corresponding to the connection mode preference, or indicate the first terminal device to switch the connection mode between the first terminal device and the access network device to a connection mode corresponding to the connection mode preference. In this way, it can be preferentially ensured that the first terminal device is connected to the access network device in the connection mode corresponding to the connection mode preference.

For another example, when the connection mode preference is the same as the current connection mode of the first terminal device, if a signal strength of an interface corresponding to the connection mode preference does not meet a corresponding signal strength requirement, the access network device may also send the path switching information to the first terminal device, to indicate the first terminal device to switch to another connection mode to be connected to the access network device. Specifically, the another connection mode may be a connection mode that is different from a connection mode corresponding to the connection mode preference. In this way, stability of the connection between the first terminal device and the access network device can be ensured, and a data transmission success probability can be ensured.

For another example, if the connection mode preference is the same as the current connection mode of the first terminal device, and a signal strength of an interface corresponding to the connection mode preference meets a corresponding signal strength requirement, the access network device may not send the path switching information to the first terminal device. Alternatively, if the connection mode preference is different from the current connection mode of the first terminal device, but a signal strength of an interface corresponding to the connection mode preference does not meet a corresponding signal strength requirement, the access network device may not send the path switching information to the first terminal device. In this way, the connection mode of the first terminal device remains unchanged, so that continuity of data transmission between the first terminal device and the access network device can be ensured. This helps ensure service continuity.

It should be noted that the connection mode of the first terminal device mentioned in this embodiment of this application may be understood as the connection mode for connecting the first terminal device to the access network device.

In the technical solutions of this embodiment of this application, the access network device sends the path switching information to the first terminal device based on the connection mode preference information of the first terminal device, and the first terminal device switches a path based on the path switching information. In this way, a connection mode to which the first terminal device switches can better meet a connection requirement of the first terminal device.

In some optional embodiments, in step 301, the access network device obtains the connection mode preference information of the first terminal device from a first network device, or may obtain the connection mode preference information of the first terminal device from the first terminal device.

The first network device may be an AMF or an SMF.

In a possible implementation, as shown in a schematic flowchart in FIG. 3B, step 301 includes the following steps:
3011: The access network device receives the connection mode preference information of the first terminal device from the first network device.

The first network device may be the AMF, the SMF, or another network device.

Specifically, when the first network device is the AMF, the access network device may receive the connection mode preference information of the first terminal device from the AMF. For example, the AMF may obtain subscription data of the first terminal device from a UDM, and obtain the connection mode preference information of the first terminal device from the subscription data of the first terminal device. Then, the AMF sends the connection mode preference information of the first terminal device to the access network device.

Specifically, when the first network device is the SMF, the access network device may receive the connection mode preference information of the first terminal device from the SMF. For example, the SMF may obtain subscription data of the first terminal device from a UDM, and obtain the connection mode preference information of the first terminal device from the subscription data of the first terminal device. Then, the SMF sends the connection mode preference information of the first terminal device to the access network device.

It should be noted that the subscription data of the first terminal device may include a connectivity indicator (connectivity indicator), used to indicate the connection mode preference of the first terminal device. Further, the first network device may send the connection mode preference information of the first terminal device to the access network device based on the connectivity indicator in the subscription data of the first terminal device.

For example, the connectivity indicator in the subscription data of the first terminal device is a dual connectivity indicator (dual connectivity indicator). The dual connectivity indicator indicates that the connection mode preference of the first terminal device is the Uu interface and PCS interface dual connectivity. The first network device may send the connection mode preference information of the first terminal device to the access network device based on the dual connectivity indicator. The connection mode preference information indicates the Uu interface and PCS interface dual connectivity.

For another example, the connectivity indicator in the subscription data of the first terminal device is a PCS preference indicator (PCS preference indicator). The PCS preference indicator indicates that the connection mode preference of the first terminal device is the PCS interface single connectivity. The first network device may send the connection mode preference information of the first terminal device to the access network device based on the PCS preference indicator. The connection mode preference information indicates the PCS interface single connectivity.

For another example, the connectivity indicator in the subscription data of the first terminal device is a Uu preference indicator (Uu preference indicator). The Uu preference indicator indicates that the connection mode preference of the first terminal device is the Uu interface single connectivity. The first network device may send the connection mode preference information of the first terminal device to the access network device based on the Uu preference indication. The connection mode preference information indicates the Uu interface single connectivity.

In some other optional embodiments, in step 301, the access network device obtains the connection mode preference information from the first terminal device.

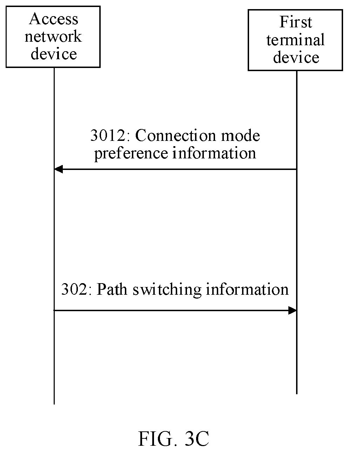

Specifically, in a schematic flowchart shown in FIG. 3C, step 301 includes the following steps:
3012: The access network device receives the connection mode preference information from the first terminal device.

In this way, the first terminal device reports the connection mode preference information to the access network device, so that the access network device can indicate, based on the connection mode preference information reported by the first terminal device, the first terminal device to switch the connection mode. Therefore, the connection mode to which the first terminal device switches better meets a connection requirement of the first terminal device.

Optionally, the connection mode preference information is carried in a measurement report. In this way, the first terminal device sends the connection mode preference information to the access network device by including the connection mode preference information in the measurement report. This can reduce signaling overheads.

For example, the first terminal device may send the measurement report to the access network device. The measurement report includes the connection mode preference information.

For step 302, embodiments of this application provide the following several possible implementations.

### Manner 1:

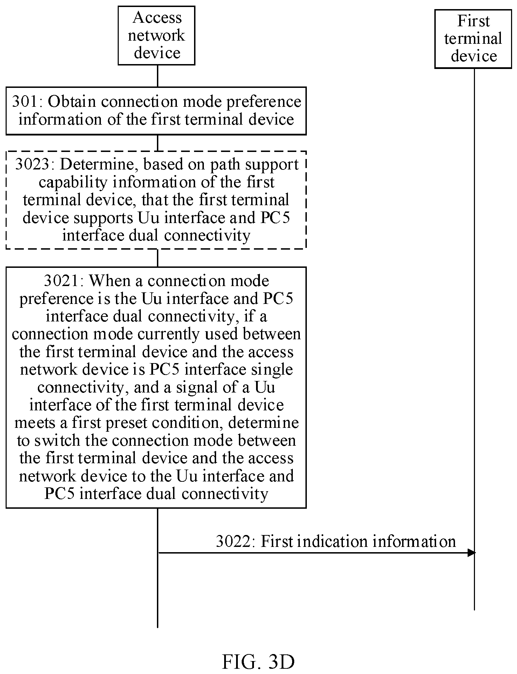

The connection mode preference indicated by the connection mode preference information is the Uu interface and PCS interface dual connectivity. As shown in a schematic flowchart shown in FIG. 3D, step 302 may include the following steps:

3021: When the connection mode preference is the Uu interface and PCS interface dual connectivity, if the connection mode currently used between the first terminal device and the access network device is the PCS interface single connectivity, and the signal of the Uu interface of the first terminal device meets the first preset condition, the access network device determines to switch the connection mode between the first terminal device and the access network device to the Uu interface and PCS interface dual connectivity.

For related supplementary descriptions of the first preset condition, refer to the foregoing embodiments. Details are not described herein again.

3022: The access network device sends the path switching information to the first terminal device.

The path switching information may include first indication information. The first indication information indicates the first terminal device to establish a Uu interface connection to the access network device, and maintain a PCS interface connection to the relay device. Alternatively, the path switching information may be the target connection mode between the first terminal device and the access network device, and the target connection mode is the Uu interface and PCS interface dual connectivity.

It should be noted that the "maintain" mentioned in this application may also mean not releasing. This is not limited. For example, maintaining the PCS interface connection between the first terminal device and the relay device may be understood as not releasing the PCS interface connection between the first terminal device and the relay device.

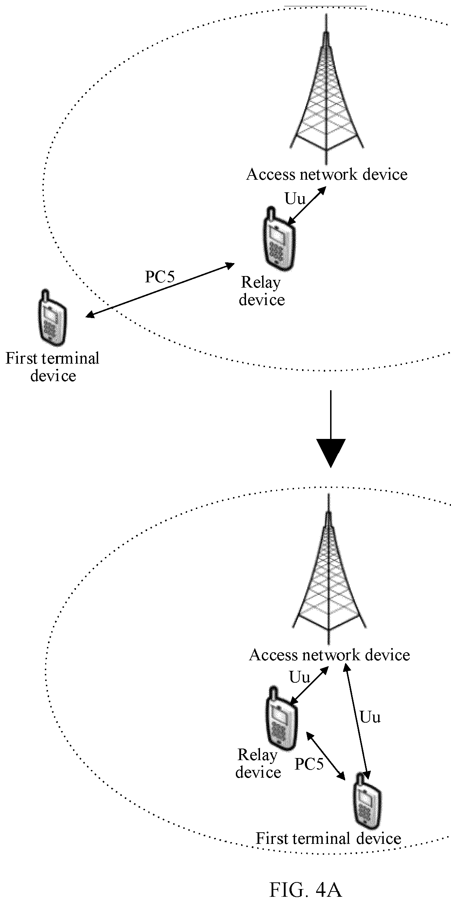

For example, in a schematic diagram of a scenario shown in FIG. 4A, it is assumed that a first terminal device is located outside a coverage area of a wireless network, and the first terminal device is connected to an access network device via a relay device. In this case, when the first terminal device moves from a location outside the coverage area of the wireless network to a location within the coverage area of the wireless network, and a signal of a Uu interface of the first terminal device meets a first preset condition, if a connection mode preference of the first terminal device is Uu interface and PCS interface dual connectivity, the access network device may send the first indication information to the first terminal device. Correspondingly, the first terminal device switches a connection mode to the Uu interface and PCS interface dual connectivity based on the first indication information, so that the first terminal device can not only continue to transmit service data that is not completely transmitted through a PCS interface, but also transmit data through the Uu interface. This ensures service continuity. Such a connection mode can meet a requirement of a service that has a high continuity requirement.

It should be understood that, in some optional embodiments, step 3021 and step 3022 may alternatively be combined as follows:
When the connection mode preference of the first terminal device is the Uu interface and PCS interface dual connectivity, if the connection mode currently used between the first terminal device and the access network device is the PCS interface single connectivity, and the signal of the Uu interface of the first terminal device meets the first preset condition, the access network device sends the path switching information to the first terminal device.

Optionally, still refer to FIG. 3D. Before step 3022, step 302 further includes the following steps:
3023: The access network device determines, based on path support capability information of the first terminal device, that the first terminal device supports the Uu interface and PCS interface dual connectivity.

The path support capability information of the first terminal device may indicate a connection mode supported by the first terminal device.

In this way, before indicating the first terminal device to switch to the Uu interface and PCS interface dual connectivity, the access network device first determines whether the first terminal device supports the Uu interface and PCS interface dual connectivity. This can avoid a case in which the first terminal device cannot perform the Uu interface and PCS interface dual connectivity based on the first indication information after the access network device sends the first indication information to the first terminal device.

In a possible implementation, the connection mode preference information includes the path support capability information, or the connection mode preference information and the path support capability information may be a same type of information. To be specific, the connection mode preference information indicates the connection mode preference of the first terminal device, and further indicates the connection mode supported by the first terminal device. In other words, the connection mode preference is a connection capability supported by the first terminal device.

In another possible implementation, the connection mode preference information does not include the path support capability information. Before step 3023, the access network device may obtain the path support capability information of the first terminal device. The access network device may obtain the path support capability information from the first terminal device or the first network device.

Optionally, the access network device obtains the path support capability information from the first terminal device. The path support capability information may be carried in a measurement report sent by the first terminal device to the access network device. This can reduce signaling overheads.

Optionally, the access network device obtains the path support capability information from the first network device. The first terminal device may include the path support capability information in a registration request. The path support capability information is forwarded by the access network device to a database that stores user subscription data. The first network device may be a core network device, for example, an AMF or an SMF. This is not limited.

Specifically, the first network device may obtain the path support capability information from subscription data of the first terminal device. For example, the first network device may obtain the subscription data of the first terminal device from the database that stores the user subscription data. The subscription data includes the path support capability information of the first terminal device. The first network device obtains the path support capability information from the subscription data.

The database that stores the user subscription data may be a UDM or a home subscriber server (home subscribe server, HSS). This is not limited.

It should be understood that, in some optional embodiments, the foregoing steps 3021 to 3023 may alternatively be combined as follows:

When the connection mode preference of the first terminal device is the Uu interface and PCS interface dual connectivity, and the first terminal device supports the Uu interface and PCS interface dual connectivity, if the connection mode currently used between the first terminal device and the access network device is the PCS interface single connectivity, and the signal of the Uu interface of the first terminal device meets the first preset condition, the access network device sends the path switching information in step 3022 to the first terminal device.

### Manner 2:

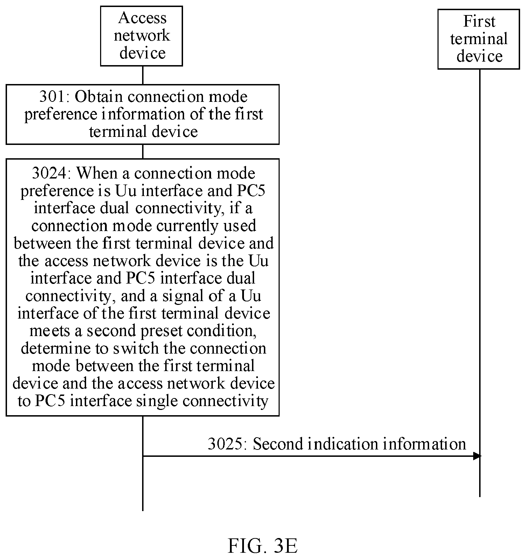

The connection mode preference indicated by the connection mode preference information is the Uu interface and PCS interface dual connectivity. As shown in a schematic flowchart shown in FIG. 3E, step 302 may include the following steps:

3024: When the connection mode preference is the Uu interface and PCS interface dual connectivity, if the connection mode currently used between the first terminal device and the access network device is the Uu interface and PCS interface dual connectivity, and the signal of the Uu interface of the first terminal device meets a second preset condition, the access network device determines to switch the connection mode between the first terminal device and the access network device to the PCS interface single connectivity.

The second preset condition may be based on at least one of the following: the signal strength, the signal quality, or the signal-to-noise ratio.

For example, the second preset condition may be one of the following:
The signal strength of the Uu interface is less than or equal to the first strength threshold; the signal strength of the Uu interface is less than the first strength threshold; the signal quality of the Uu interface is less than or equal to the first quality threshold; the signal quality of the Uu interface is less than the first quality threshold; the signal-to-noise ratio of the Uu interface is less than or equal to the first signal-to-noise ratio threshold; or the signal-to-noise ratio of the Uu interface is less than the first signal-to-noise ratio threshold.

Specifically, if the first preset condition is that the signal strength of the Uu interface is greater than or equal to the first strength threshold, the second preset condition may be that the signal strength of the Uu interface is less than the first strength threshold. If the first preset condition is that the signal strength of the Uu interface is greater than the first strength threshold, the second preset condition may be that the signal strength of the Uu interface is less than or equal to the first strength threshold.

If the first preset condition is that the signal quality of the Uu interface is greater than or equal to the first quality threshold, the second preset condition may be that the signal quality of the Uu interface is less than the first quality threshold. If the first preset condition is that the signal quality of the Uu interface is greater than the first quality threshold, the second preset condition may be that the signal quality of the Uu interface is less than or equal to the first quality threshold.

If the first preset condition is that the signal-to-noise ratio of the Uu interface is greater than or equal to the first signal-to-noise ratio threshold, the second preset condition may be that the signal-to-noise ratio of the Uu interface is less than the first signal-to-noise ratio threshold. If the first preset condition is that the signal-to-noise ratio of the Uu interface is greater than the first signal-to-noise ratio threshold, the second preset condition may be that the signal-to-noise ratio of the Uu interface is less than or equal to the first signal-to-noise ratio threshold.

It is clear that the second preset condition may be based on two or three of the signal quality, the signal strength, and the signal-to-noise ratio. This is not limited.

3025: The access network device sends the path switching information to the first terminal device.

The path switching information may include second indication information. The second indication information indicates the first terminal device to release a Uu interface connection to the access network device, and maintain a PCS interface connection to the relay device. Alternatively, the path information may be the target connection mode between the first terminal device and the access network device. The target connection mode is the PCS interface single connectivity.

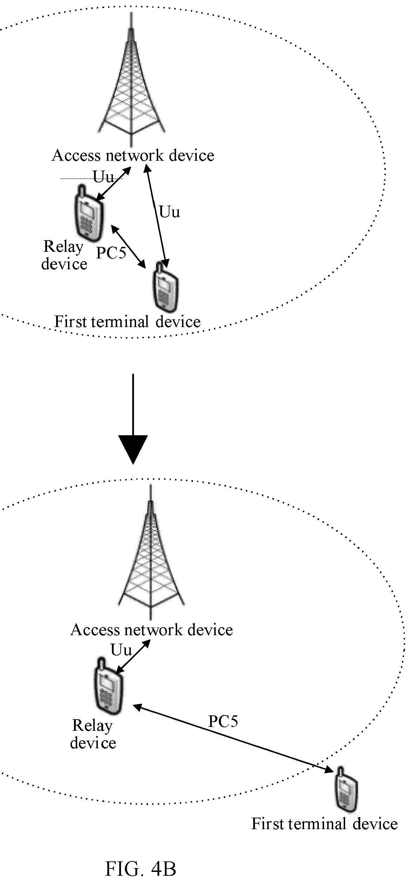

For example, as shown in a schematic diagram of a scenario in FIG. 4B, it is assumed that a first terminal device is located within a coverage area of a wireless network, and a connection mode currently used between the first terminal device and an access network device is Uu interface and PCS interface dual connectivity. In this case, when the first terminal device moves from a location within the coverage area of the wireless network to a location outside the coverage area of the wireless network, a signal strength of a Uu interface of the first terminal device may not meet a signal strength requirement of the Uu interface. In this scenario, if a connection mode preference of the first terminal device is the Uu interface and PCS interface dual connectivity, the access network device may send the second indication information to the first terminal device. Correspondingly, the first terminal device switches to PCS interface single connectivity based on the second indication information (where specifically, the first terminal device releases a Uu interface connection to the access network device, and maintains a PCS interface connection to a relay device). This can avoid data transmission interruption caused by a weak signal strength of the Uu interface. Therefore, a data transmission success probability is improved.

It should be understood that the foregoing steps 3021 to 3023 and steps 3024 and 3025 may be implemented in a same embodiment, only steps 3021 to 3023 may be implemented in one embodiment, or only steps 3024 and 3025 may be implemented in one embodiment.

Optionally, steps 3024 and 3035 may be combined as follows:
When the connection mode preference is the Uu interface and PCS interface dual connectivity, if the connection mode currently used between the first terminal device and the access network device is the Uu interface and PCS interface dual connectivity, and the signal of the Uu interface of the first terminal device meets the second preset condition, the access network device sends the path switching information in step 3025 to the first terminal device.

It is clear that path support capability information of the first terminal device may be further combined based on the foregoing steps 3024 and 3025. For details, refer to the related descriptions of the foregoing step 3023. For example, when the connection mode preference is the Uu interface and PCS interface dual connectivity, and the first terminal device supports the PCS interface single connectivity, if the connection mode currently used between the first terminal device and the access network device is the Uu interface and PCS interface dual connectivity, and the signal of the Uu interface of the first terminal device meets the second preset condition, the access network device sends the path switching information in step 3025 to the first terminal device.

### Manner 3:

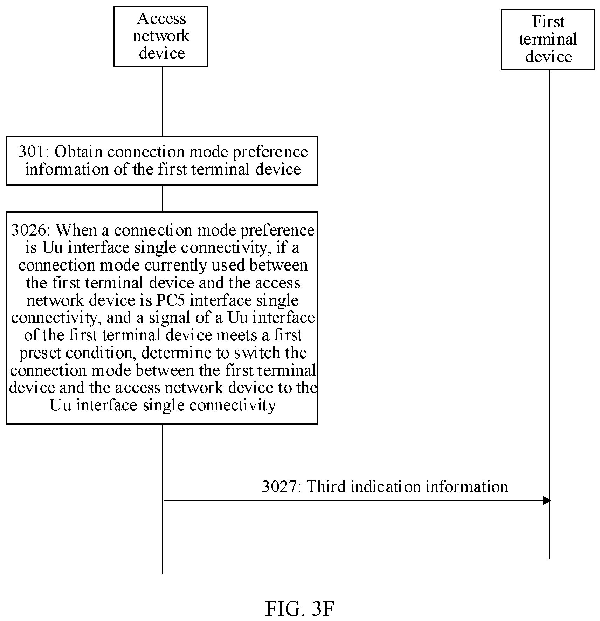

The connection mode preference indicated by the connection mode preference information is the Uu interface single connectivity. As shown in a schematic flowchart shown in FIG. 3F, step 302 may include the following steps:
3026: When the connection mode preference is the Uu interface single connectivity, if the connection mode currently used between the first terminal device and the access network device is the PCS interface single connectivity, and the signal of the Uu interface of the first terminal device meets the first preset condition, the access network device determines to switch the connection mode between the first terminal device and the access network device to the Uu interface single connectivity.

For related supplementary descriptions of the first preset condition, refer to the foregoing embodiments. Details are not described herein again.

3027: The access network device sends the path switching information to the first terminal device.

The path switching information may include third indication information. The third indication information indicates the first terminal device to establish a Uu interface connection to the access network device, and release a PCS interface connection to the relay device. Alternatively, the path switching information may be the target connection mode between the first terminal device and the access network device, and the target connection mode is the Uu interface single connectivity.

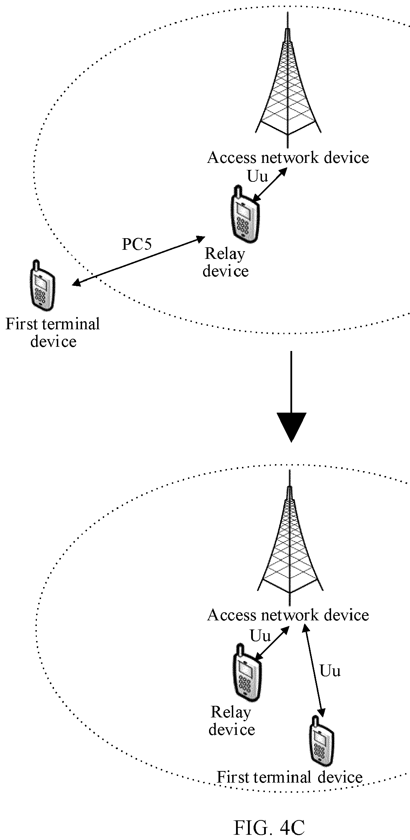

For example, as shown in a schematic diagram of a scenario in FIG. 4C, it is assumed that a first terminal device is located outside a coverage area of a wireless network, and a connection mode currently used between the first terminal device and an access network device is PCS interface single connectivity. In this case, when the first terminal device moves from a location outside the coverage area of the wireless network to a location within the coverage area of the wireless network, a signal strength of a Uu interface of the first terminal device may meet a signal strength requirement of the Uu interface. In this scenario, if a connection mode preference of the first terminal device is Uu interface single connectivity, the access network device sends the third indication information to the first terminal device. Correspondingly, the first terminal device switches to the Uu interface single connectivity based on the third indication information (where specifically, the first terminal device establishes a Uu interface connection to the access network device, and releases a PCS interface connection to a relay device). Therefore, data transmission efficiency can be improved. Such a connection mode can meet a requirement of a service that has high data transmission efficiency.

Optionally, step 3026 and step 3027 may be combined as follows:
When the connection mode preference is the Uu interface single connectivity, if the connection mode currently used between the first terminal device and the access network device is the PCS interface single connectivity, and the signal of the Uu interface of the first terminal device meets the first preset condition, the access network device sends the path switching information in step 3207 to the first terminal device.

It is clear that path support capability information of the first terminal device may be further combined based on the foregoing steps 3026 and 3027. For details, refer to the related descriptions of the foregoing step 3023. For example, when the connection mode preference is the Uu interface single connectivity, and the first terminal device supports the Uu interface single connectivity, if the connection mode currently used between the first terminal device and the access network device is the PCS interface single connectivity, and the signal of the Uu interface of the first terminal device meets the first preset condition, the access network device sends the path switching information in step 3027 to the first terminal device.

### Manner 4:

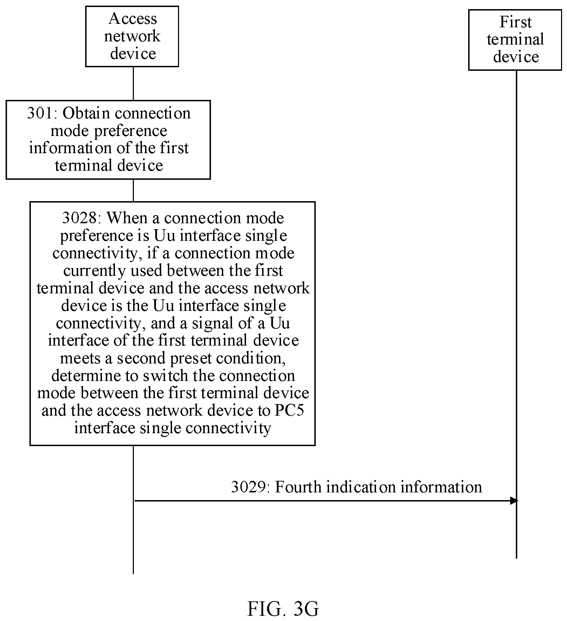

The connection mode preference indicated by the connection mode preference information is the Uu interface single connectivity. As shown in a schematic flowchart shown in FIG. 3G, in some other possible implementations, step 302 may include:
3028: When the connection mode preference is the Uu interface single connectivity, if the connection mode currently used between the first terminal device and the access network device is the Uu interface single connectivity, and the signal of the Uu interface of the first terminal device meets a second preset condition, the access network device determines to switch the connection mode between the first terminal device and the access network device to the PCS interface single connectivity.

For related supplementary descriptions of the second preset condition, refer to the foregoing embodiments. Details are not described herein again.

3029: The access network device sends the path switching information to the first terminal device.

The path switching information may include fourth indication information. The fourth indication information indicates the first terminal device to establish a PCS interface connection to the relay device and release a Uu interface connection to the access network device. Alternatively, the path switching information may be the target connection mode between the first terminal device and the access network device. The target connection mode is the PCS interface single connectivity.

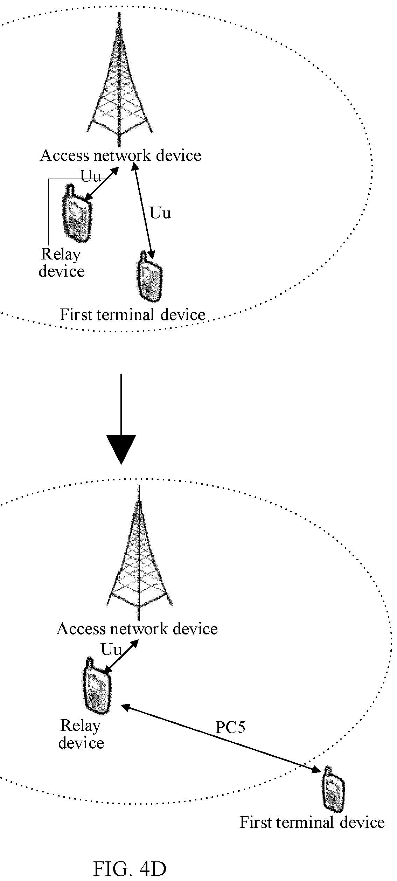

For example, as shown in a schematic diagram of a scenario in FIG. 4D, it is assumed that a first terminal device is located within a coverage area of a wireless network, and a connection mode currently used between the first terminal device and an access network device is Uu interface single connectivity. In this case, when the first terminal device moves from a location within the coverage area of the wireless network to a location outside the coverage area of the wireless network, a signal strength of the Uu interface of the first terminal device may fail to meet a signal strength requirement of the Uu interface. In this scenario, if a connection mode preference of the first terminal device is PCS interface single connectivity, the access network device sends the fourth indication information to the first terminal device. Correspondingly, the first terminal device switches to the PCS interface single connectivity based on the fourth indication information (where specifically, the first terminal device releases a Uu interface connection to the access network device, and establishes a PCS interface connection to a relay device). This can avoid data transmission interruption caused by a weak signal strength of the Uu interface, and improve a data transmission success probability.

Optionally, step 3028 and step 3029 may be combined as follows:
When the connection mode preference is the Uu interface single connectivity, if the connection mode currently used between the first terminal device and the access network device is the Uu interface single connectivity, and the signal of the Uu interface of the first terminal device meets a second preset condition, the access network device sends the path switching information in step 3029 to the first terminal device.

It is clear that path support capability information of the first terminal device may be further combined based on the foregoing steps 3028 and 3029. For details, refer to the related descriptions of the foregoing step 3023. For example, when the first terminal device supports the PCS interface single connectivity, if the connection mode currently used between the first terminal device and the access network device is the Uu interface single connectivity, and the signal of the Uu interface of the first terminal device meets the second preset condition, the access network device sends the path switching information in step 3029 to the first terminal device.

It should be understood that, in this application, embodiments corresponding to FIG. 3B to FIG. 3G may be separately implemented, and one of the embodiment corresponding to FIG. 3B or the embodiment corresponding to FIG. 3C may be implemented in combination with any one of embodiments corresponding to FIG. 3D to FIG. 3G.

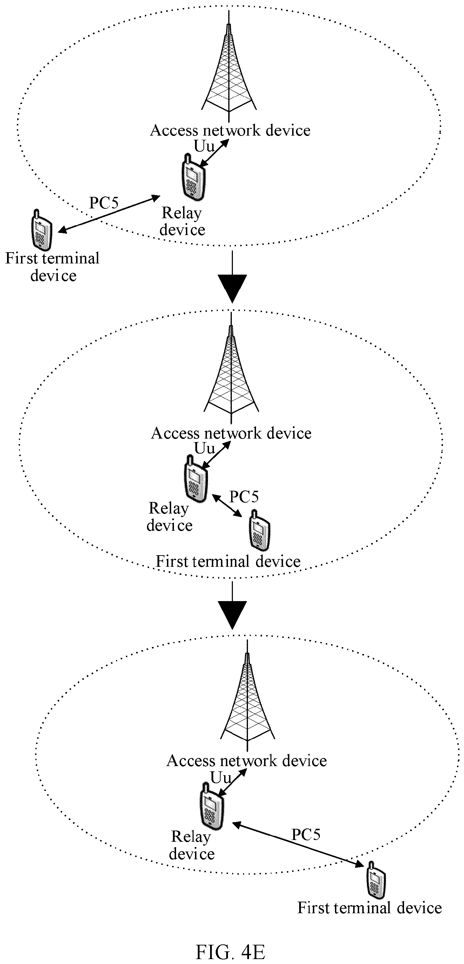

If the connection mode preference indicated by the connection mode preference information is the PCS interface single connectivity, the access network device determines that the first terminal device maintains the PCS interface connection, and does not need to switch the connection mode, and the access network device does not send the path switching information. As shown in a schematic diagram of a scenario in FIG. 4E, when a first terminal device is located outside a coverage area of a wireless network, a connection mode between the first terminal device and a network device is PCS interface single connectivity. When the first terminal device moves from a location outside the coverage area of the wireless network to a location within the coverage area of the wireless network, the PCS interface single connectivity is maintained, so that service data can be always transmitted through the PCS interface in a moving process of the first terminal device. This can well ensure service continuity. Such a connection mode can meet a requirement of a service that has a high continuity requirement.

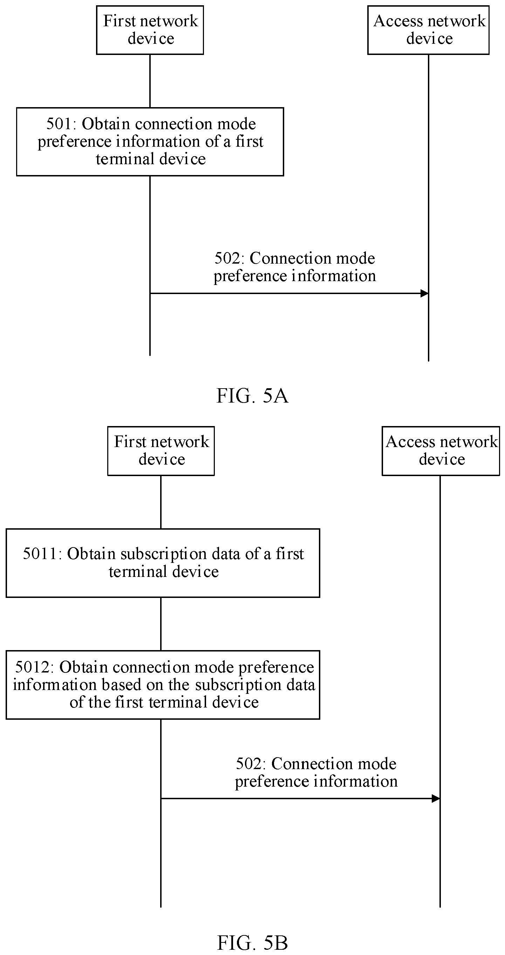

As shown in a schematic flowchart shown in FIG. 5A, an embodiment of this application further provides a connection method. The method is as follows:
501: A first network device obtains connection mode preference information of a first terminal device.

The connection mode preference information indicates a connection mode preference of the first terminal device.

For example, the connection mode preference information indicates that the connection mode preference of the first terminal device is Uu interface and PCS interface dual connectivity, or indicates that the connection mode preference of the first terminal device is Uu interface single connectivity, or indicates that the connection mode preference of the first terminal device is PCS interface single connectivity.

Related descriptions about the connection mode preference in the foregoing embodiments are also applicable to this embodiment. Details are not described herein again.

The first network device may be a core network device, for example, an AMF or an SMF. This is not limited.

The first network device may obtain the connection mode preference information from subscription data of the first terminal device. For a manner in which the first network device obtains the subscription data of the first terminal device, refer to the related descriptions in the foregoing embodiments. Details are not described herein again.

502: The first network device sends the connection mode preference information to an access network device.

Optionally, the connection mode preference information may be carried in a context transfer (context transfer) message. For example, the first network device may send the context transfer message to the access network device. The context transfer message includes the connection mode preference information. This helps reduce signaling overheads.

In this embodiment of this application, the access network device can indicate, based on the connection mode preference information sent by the first network device, the first terminal device to switch a connection mode. Therefore, a connection mode to which the first terminal device switches better meets a connection requirement of the first terminal device.

Optionally, in a schematic flowchart shown in FIG. 5B, step 501 includes the following steps:
5011: The first network device obtains the subscription data of the first terminal device.
5012: The first network device obtains the connection mode preference information based on the subscription data of the first terminal device.

For a specific implementation and an example in which the first network device obtains the connection mode preference information based on the subscription data of the first terminal device, refer to the foregoing embodiments. Details are not described herein again.

In this way, the first network device can obtain the connection mode preference information of the first terminal device, and send the connection mode preference information to the access network device, so that the access network device can send path switching information to the first terminal device based on the connection mode preference information.

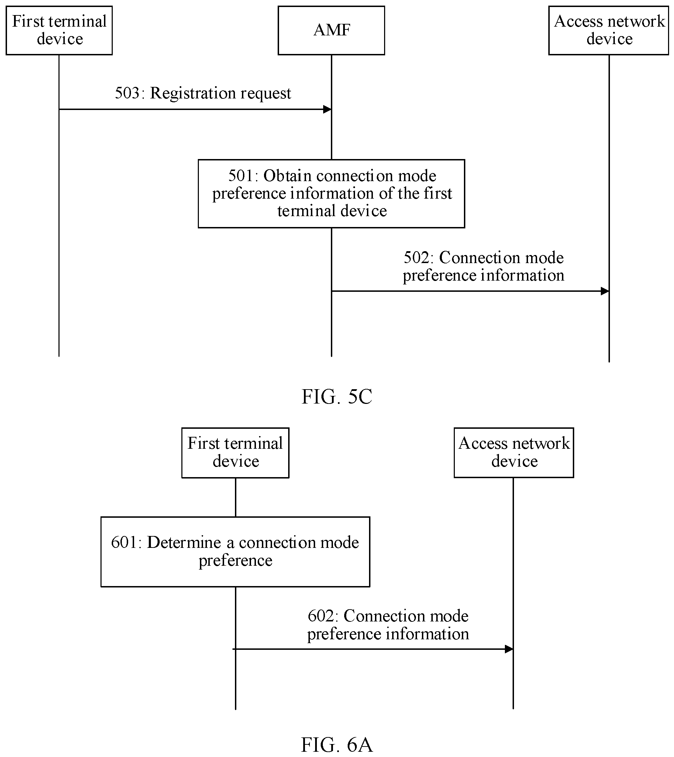

As shown in a schematic flowchart shown in FIG. 5C, in an optional embodiment, the first network device is an AMF. Before step 501, the connection method may further include the following steps:
503: The AMF receives a registration request from the first terminal device.

The registration request includes path support capability information of the first terminal device. The path support capability information indicates that the first terminal device supports one or more of the following: Uu interface and PCS interface dual connectivity, Uu interface single connectivity, or PCS interface single connectivity.

In the foregoing embodiments, related descriptions that may be referred to for the path support capability information is also applicable to this embodiment. Details are not described herein again.

The registration request may be sent by the first terminal device to the access network device, and forwarded by the access network device to the AMF.

In this way, the first terminal device includes the path support capability information in the registration request, to report the path support capability information to the AMF, so that the access network device can obtain the path support capability information from the AMF.

It should be noted that the embodiment corresponding to FIG. 5B and the embodiment corresponding to FIG. 5C may be implemented together, or may be implemented separately. This is not limited in this application.

As shown in a schematic flowchart shown in FIG. 6A, an embodiment of this application further provides a connection method. The method is as follows:
601: A first terminal device determines a connection mode preference.

Specifically, the first terminal device may determine the connection mode preference based on one or two of a service scenario and an expected movement track.

For example, if data transmission reliability and fast transmission efficiency needs to be ensured in a service scenario of the first terminal device, the first terminal device may determine that the connection mode preference is Uu interface and PCS interface dual connectivity.

For another example, if data transmission efficiency needs to be ensured in a service scenario, and most of expected movement tracks of the first terminal device are located within a coverage area of a wireless network, the first terminal device may determine that the connection mode preference is Uu interface single connectivity.

For another example, if data transmission reliability needs to be preferentially ensured in a service scenario of the first terminal device, the first terminal device may determine that the connection mode preference is PCS interface single connectivity.

602: The first terminal device sends connection mode preference information to an access network device. The connection mode preference information indicates the connection mode preference of the first terminal device.

The connection mode preference information indicates that the connection mode preference of the first terminal device is the Uu interface and PCS interface dual connectivity, indicates that the connection mode preference of the first terminal device is the Uu interface single connectivity, or indicates that the connection mode preference of the first terminal device is the PCS interface single connectivity.

The connection mode preference information may be carried in a measurement report. For example, the first terminal device sends the measurement report to the access network device. The measurement report includes the connection mode preference information.

Optionally, the measurement report further includes a signal strength of a Uu interface of the first terminal device.

In this way, the first terminal device determines the connection mode preference, and includes the connection mode preference information in the measurement report, so that the access network device can indicate, based on the connection mode preference determined by the first terminal device, the first terminal device to switch a connection mode. Therefore, the connection mode of the first terminal device can better meet a connection requirement of the first terminal device.

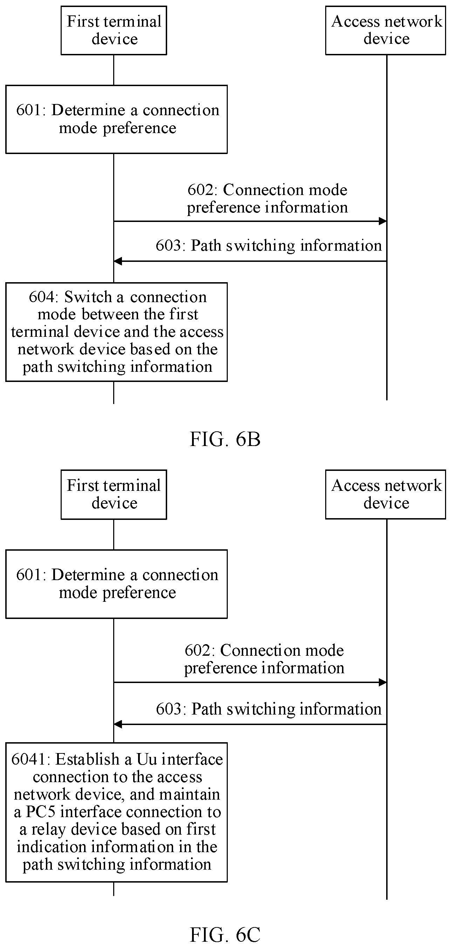

As shown in a schematic flowchart in FIG. 6B, in some optional embodiments, the connection method further includes the following steps:
603: The first terminal device receives path switching information from the access network device.

The path switching information may be used to switch the connection mode between the first terminal device and the access network device.

The related descriptions of the path switching information in the foregoing embodiments are also applicable to this embodiment. Details are not described in this embodiment again.

604: The first terminal device switches the connection mode between the first terminal device and the access network device based on the path switching information.

In some optional embodiments, the path switching information includes indication information.

Specifically, the path switching information includes first indication information, and the first indication information indicates the first terminal device to establish a Uu interface connection to the access network device, and maintain a PCS interface connection to a relay device.

Alternatively, the path switching information includes second indication information, and the second indication information indicates the first terminal device to release a Uu interface connection to the access network device, and maintain a PCS interface connection to a relay device.

Alternatively, the path switching information includes third indication information, and the third indication information indicates the first terminal device to establish a Uu interface connection to the access network device, and release a PCS interface connection to a relay device.

Alternatively, the path switching information includes fourth indication information, and the fourth indication information indicates the first terminal device to establish a PCS interface connection to a relay device, and release a Uu interface connection to the access network device.

For the first indication information, the second indication information, the third indication information, and fourth indication information, refer to the related descriptions in the foregoing embodiments. Details are not described again.

In some other optional embodiments, the path switching information may be a target connection mode between the first terminal device and the access network device, in other words, a connection mode to which the first terminal device is to switch between the first terminal device and the access network device. The target connection mode may be, for example, one of the Uu interface and PCS interface dual connectivity, the Uu interface single connectivity, or the PCS interface single connectivity.

In this way, the path switching information received by the first terminal device is determined by the access network device based on a connection mode preference manner reported by the first terminal device. The first terminal device switches the connection mode between the first terminal device and the access network device based on the path switching information. This can better meet a connection requirement of the first terminal device.

Specifically, for step 604, this embodiment of this application provides the following several possible implementations.

### Manner 1:

The path switching information includes the first indication information. As shown in a schematic flowchart shown in FIG. 6C, step 604 may include the following steps:
6041: The first terminal device establishes the Uu interface connection to the access network device, and maintains the PCS interface connection to the relay device based on the first indication information in the path switching information.

In this way, in the schematic diagram of the scenario shown in FIG. 4A, it is assumed that the first terminal device is located outside the coverage area of the wireless network, and the first terminal device is connected to the access network device via the relay device. In this case, when the first terminal device moves from a location outside the coverage area of the wireless network to a location within the coverage area of the wireless network, and the signal of the Uu interface of the first terminal device meets the first preset condition, the first terminal device can switch the connection mode to the Uu interface and PCS interface dual connectivity based on the first indication information in the path switching information, so that the first terminal device can not only continue to transmit the service data that is not completely transmitted through the PCS interface, but also transmit the data through the Uu interface. This ensures service continuity. Such a connection mode can meet the requirement of the service that has a high continuity requirement.

### Manner 2:

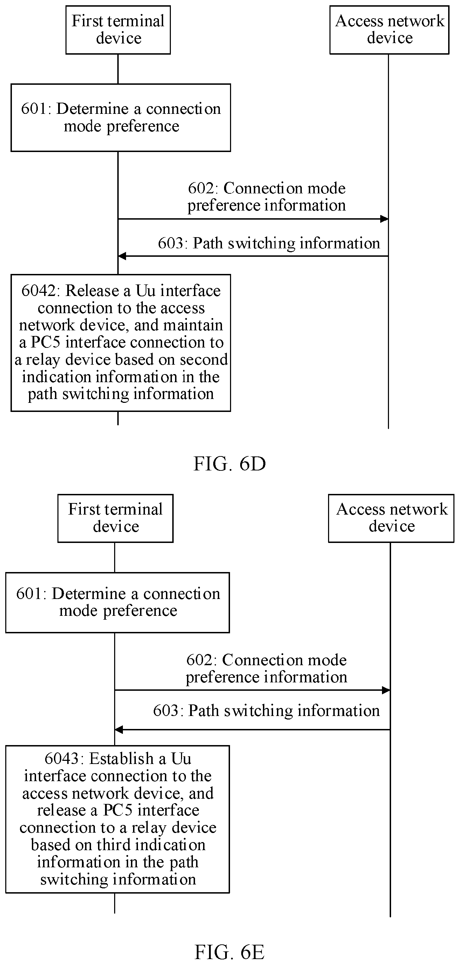

The path switching information includes the second indication information. As shown in a schematic diagram of a scenario shown in FIG. 6D, step 604 may include the following steps:
6042: The first terminal device releases the Uu interface connection to the access network device, and maintains the PCS interface connection to the relay device based on the second indication information in the path switching information.

As shown in the schematic diagram of the scenario in FIG. 4B, it is assumed that the first terminal device is located within the coverage area of the wireless network, and the connection mode currently used between the first terminal device and the access network device is the Uu interface and PCS interface dual connectivity. In this case, when the first terminal device moves from a location within the coverage area of the wireless network to a location outside the coverage area of the wireless network, the signal strength of the Uu interface of the first terminal device may not meet the signal strength requirement of the Uu interface. In this scenario, if the connection mode preference of the first terminal device is the Uu interface and PCS interface dual connectivity, the access network device may send the second indication information to the first terminal device. Correspondingly, the first terminal device switches to the PCS interface single connectivity based on the second indication information (where specifically, the first terminal device releases the Uu interface connection to the access network device, and maintains the PCS interface connection to the relay device). This can avoid the data transmission interruption caused by the weak signal strength of the Uu interface. Therefore, the data transmission success probability is improved.

### Manner 3:

The path switching information includes the third indication information. As shown in a schematic diagram of a scenario shown in FIG. 6E, step 604 may include the following steps:
6043: The first terminal device establishes the Uu interface connection to the access network device, and releases the PCS interface connection to the relay device based on the third indication information in the path switching information.

As shown in the schematic diagram of the scenario in FIG. 4C, it is assumed that the first terminal device is located outside the coverage area of the wireless network, and the connection mode currently used between the first terminal device and the access network device is the PCS interface single connectivity. In this case, when the first terminal device moves from a location outside the coverage area of the wireless network to a location within the coverage area of the wireless network, the signal strength of the Uu interface of the first terminal device may meet the signal strength requirement of the Uu interface. In this scenario, if the connection mode preference of the first terminal device is the Uu interface single connectivity, the access network device sends the third indication information to the first terminal device. Correspondingly, the first terminal device switches to the Uu interface single connectivity based on the third indication information (where specifically, the first terminal device establishes the Uu interface connection to the access network device, and releases the PCS interface connection to the relay device). Therefore, the data transmission efficiency can be improved. Such a connection mode can meet the requirement of the service that has high data transmission efficiency.

### Manner 4:

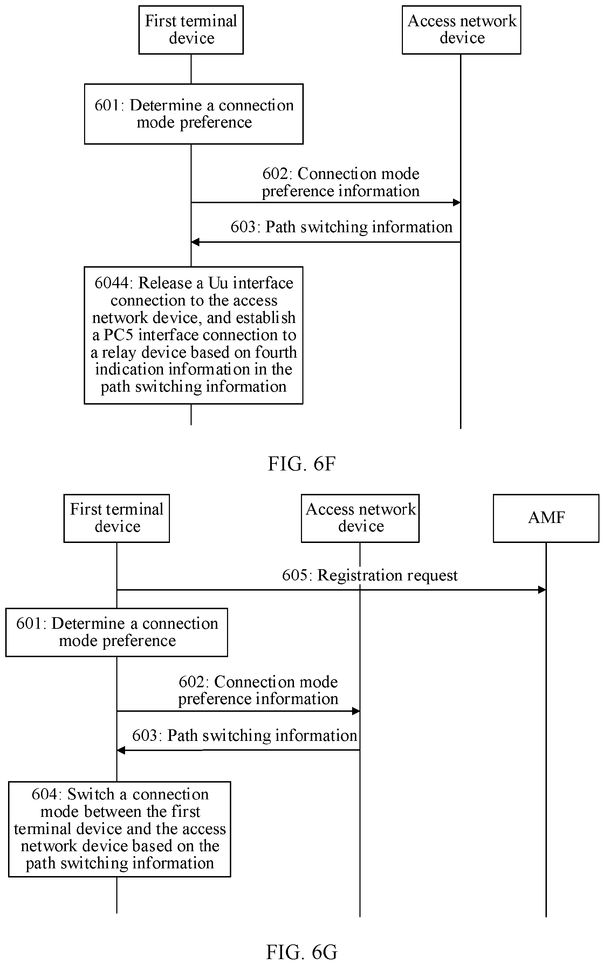

The path switching information includes the fourth indication information. As shown in a schematic diagram of a scenario shown in FIG. 6F, step 604 may include the following steps:
6044: The first terminal device releases the Uu interface connection to the access network device, and establishes the PCS interface connection to the relay device based on the fourth indication information in the path switching information.

In this way, as shown in the schematic diagram of the scenario in FIG. 4D, it is assumed that the first terminal device is located within the coverage area of the wireless network, and the connection mode currently used between the first terminal device and the access network device is the Uu interface single connectivity. In this case, when the first terminal device moves from a location within the coverage area of the wireless network to a location outside the coverage area of the wireless network, the signal strength of the Uu interface of the first terminal device may meet the signal strength requirement of the Uu interface. In this scenario, if the connection mode preference of the first terminal device is PCS interface single connectivity, the access network device sends the fourth indication information to the first terminal device. Correspondingly, the first terminal device switches to the PCS interface single connectivity based on the fourth indication information (where specifically, the first terminal device releases the Uu interface connection to the access network device, and establishes the PCS interface connection to the relay device). This can avoid the data transmission interruption caused by the weak signal strength of the Uu interface, and improve the data transmission success probability.

Optionally, the path switching information may be the target connection mode between the first terminal device and the access network device. In step 604, the first terminal device may switch the connection mode to the target connection mode. For example, if the target connection mode between the first terminal device and the access network device is the Uu interface and PCS interface dual connectivity, the first terminal device switches the connection mode between the first terminal device and the access network device to the Uu interface and PCS interface dual connectivity based on the path switching information. For another example, if the target connection mode between the first terminal device and the access network device is the Uu interface single connectivity, the first terminal device switches the connection mode between the first terminal device and the access network device to the Uu interface single connectivity based on the path switching information. For another example, if the target connection mode between the first terminal device and the access network device is the PCS interface single connectivity, the first terminal device switches the connection mode between the first terminal device and the access network device to the PCS interface single connectivity based on the path switching information.

As shown in a schematic flowchart in FIG. 6G, in some optional embodiments, the connection method further includes the following steps:
605: The first terminal device sends a registration request to an AMF.

The registration request includes path support capability information of the first terminal device. The path support capability information indicates that the first terminal device supports one or more of the following: the Uu interface and PCS interface dual connectivity, the Uu interface connectivity, or the PCS interface connectivity.

For example, the first terminal device may send the registration request to the access network device, and the access network device forwards the registration request to the AMF.

Step 605 is performed before step 602. Specifically, step 605 may be performed before step 601, or may be performed after step 601 and before step 602, or step 605 and step 601 may be performed simultaneously.

In this way, the AMF can obtain the path support capability information, and send the path support capability information to the access network device, so that before sending the path switching information to the first terminal device, the access network device first determines that the first terminal device has a capability of the target connection mode indicated by the path switching information, to avoid a connection mode switching failure caused because the first terminal device does not have the capability of the target connection mode indicated by the path switching information.

It may be understood that the embodiment corresponding to FIG. 6G may be implemented separately, or may be implemented in combination with any one of embodiments corresponding to FIG. 6A to FIG. 6F.

To better describe the technical solutions of this application, the following provides some more detailed embodiments.

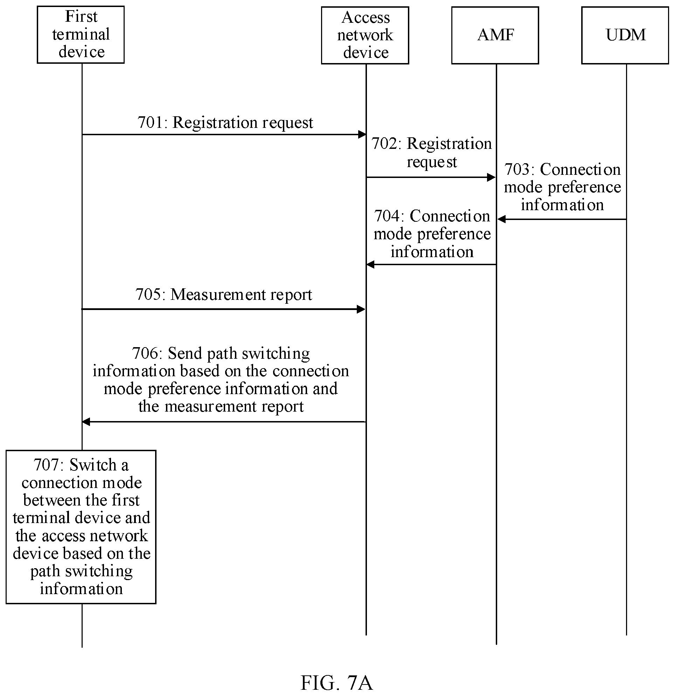

As shown in a schematic flowchart in FIG. 7A, in some embodiments, the connection method may include the following steps:
701: A first terminal device sends a registration request to an access network device.
702: The access network device sends the registration request to an AMF.

Specifically, the access network device may select an appropriate AMF for the first terminal device, and send the registration request to the AMF.

The access network device may not read or parse the registration request.

It should be understood that step 701 and step 702 are optional steps in this embodiment of this application.

703: The AMF obtains connection mode preference information of the first terminal device.

For the connection mode preference information of the first terminal device, refer to the related descriptions in the foregoing embodiments. Details are not described again.

Specifically, the AMF may obtain subscription data of the first terminal device from a UDM in a subscription retrieval manner, and obtain the connection mode preference information from the subscription data. In this way, the AMF can obtain the connection mode preference information of the first terminal device from the subscription data of the UDM, and send the connection mode preference information to the access network device, so that the access network device can send path switching information to a terminal device based on the connection mode preference information of the first terminal device.

For a connection mode preference, refer to the related descriptions in the foregoing embodiments. Details are not described again.

704: The AMF sends the connection mode preference information to the access network device.

The connection mode preference information may be carried in a context transfer (context transfer) message. For example, the AMF may send the context transfer message to the access network device. The context transfer message includes the connection mode preference information. The connection mode preference information is carried in the context transfer message, helping reduce signaling overheads.

In this way, the access network device can indicate, based on the connection mode preference information sent by the AMF, the first terminal device to switch a connection mode. Therefore, a connection mode to which the first terminal device switches better meets a connection requirement of the first terminal device.

705: The first terminal device sends a measurement report to the access network device.

The measurement report may include a signal strength of a PCS interface and/or a signal strength of a Uu interface.

706: The access network device sends the path switching information to the first terminal device based on the connection mode preference information and the measurement report.

The path switching information may be used to switch the connection mode between the first terminal device and the access network device.

Specifically, the path switching information may be a target connection mode of the first terminal device. For details, refer to the related descriptions in the foregoing embodiments. Details are not described again. The path switching information may alternatively be indication information that indicates the first terminal device to perform a specific action. For detailed indication information, refer to the related descriptions in the foregoing embodiments. Details are not described again.

707: The first terminal device switches the connection mode between the first terminal device and the access network device based on the path switching information.

In some optional embodiments, the measurement report includes the signal strength of the Uu interface.

For steps 706 and 707, this application provides the following several possible implementations.

### Manner 1:

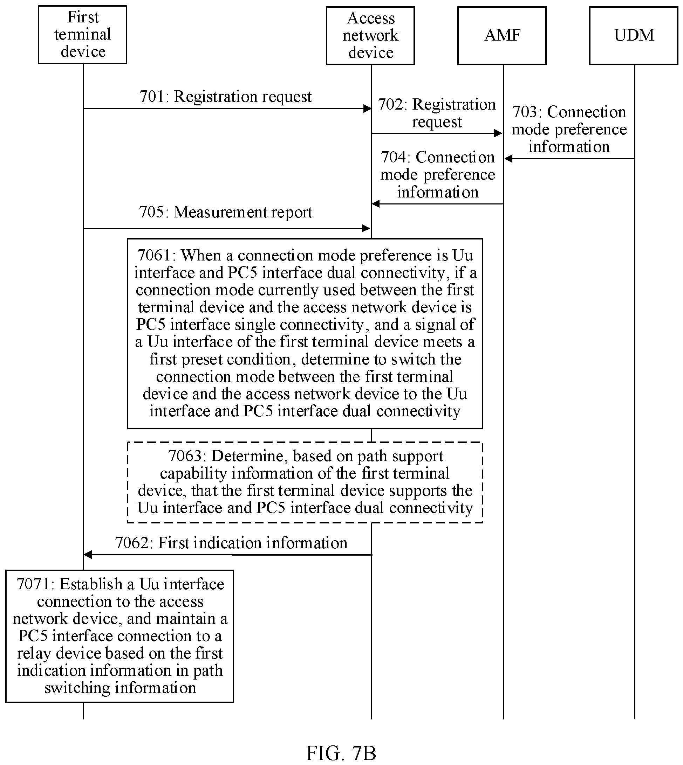

The connection mode preference is Uu interface and PCS interface dual connectivity. Based on the embodiment corresponding to the schematic flowchart in FIG. 7A, and a schematic flowchart in FIG. 7B, in a possible implementation, step 706 may include the following steps:
7061: When the connection mode preference is the Uu interface and PCS interface dual connectivity, if the connection mode currently used between the first terminal device and the access network device is PCS interface single connectivity, and a signal of the Uu interface of the first terminal device meets a first preset condition, the access network device determines to switch the connection mode between the first terminal device and the access network device to the Uu interface and PCS interface dual connectivity.
7062: The access network device sends the path switching information to the first terminal device. The path switching information includes first indication information.

The related supplementary descriptions and technical effects of step 3021 and step 3022 in the foregoing embodiments are also applicable to step 7061 and step 7062 in this embodiment. Details are not described herein again.

Step 707 may include the following step:
7071: The first terminal device establishes a Uu interface connection to the access network device, and maintains a PCS interface connection to a relay device based on the first indication information in the path switching information.

The related supplementary descriptions and technical effects of step 6041 in the foregoing embodiments are also applicable to step 7071 in this embodiment. Details are not described herein again.

Optionally, the registration request includes path support capability information. The path support capability information indicates that the first terminal device supports the Uu interface and PCS interface dual connectivity. As shown in the schematic flowchart in FIG. 7B, before step 7062, step 706 may further include the following step:

7063: The access network device determines, based on the path support capability information of the first terminal device, that the first terminal device supports the Uu interface and PCS interface dual connectivity.

The related supplementary descriptions and technical effects of step 3023 in the foregoing embodiments are also applicable to step 7063 in this embodiment. Details are not described herein again.

### Manner 2:

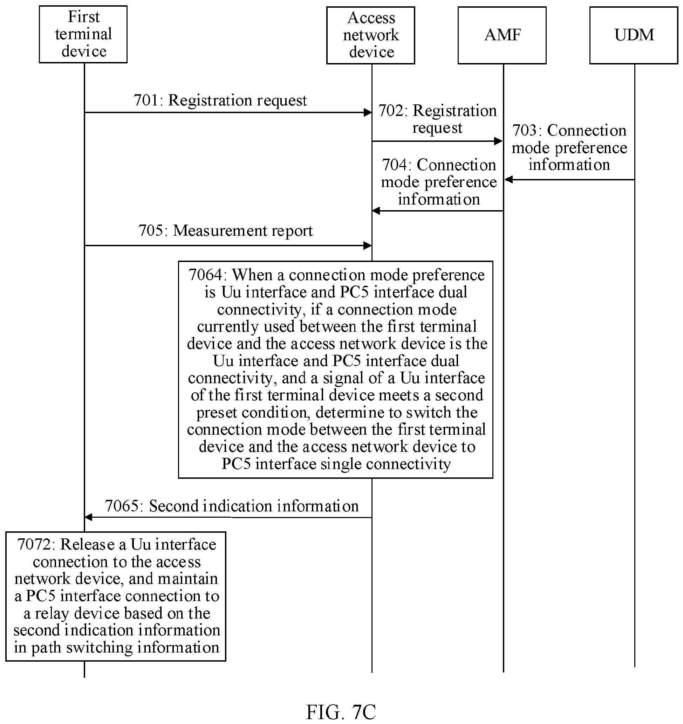

The connection mode preference is Uu interface and PCS interface dual connectivity. Based on the embodiment corresponding to the schematic flowchart in FIG. 7A, and a schematic flowchart in FIG. 7C, in a possible implementation, step 706 may include the following steps:
7064: When the connection mode preference is the Uu interface and PCS interface dual connectivity, if the connection mode currently used between the first terminal device and the access network device is the Uu interface and PCS interface dual connectivity, and a signal of the Uu interface of the first terminal device meets a second preset condition, the access network device determines to switch the connection mode between the first terminal device and the access network device to PCS interface single connectivity.
7065: The access network device sends the path switching information to the first terminal device. The path switching information may include second indication information.

The related supplementary descriptions and technical effects of step 3024 and step 3025 in the foregoing embodiments are also applicable to step 7064 and step 7065 in this embodiment. Details are not described herein again.

Step 707 may include the following step:
7072: The first terminal device releases a Uu interface connection to the access network device, and maintains a PCS interface connection to a relay device based on the second indication information in the path switching information.

The related supplementary descriptions and technical effects of step 6042 in the foregoing embodiments are also applicable to step 7072 in this embodiment. Details are not described herein again.

### Manner 3:

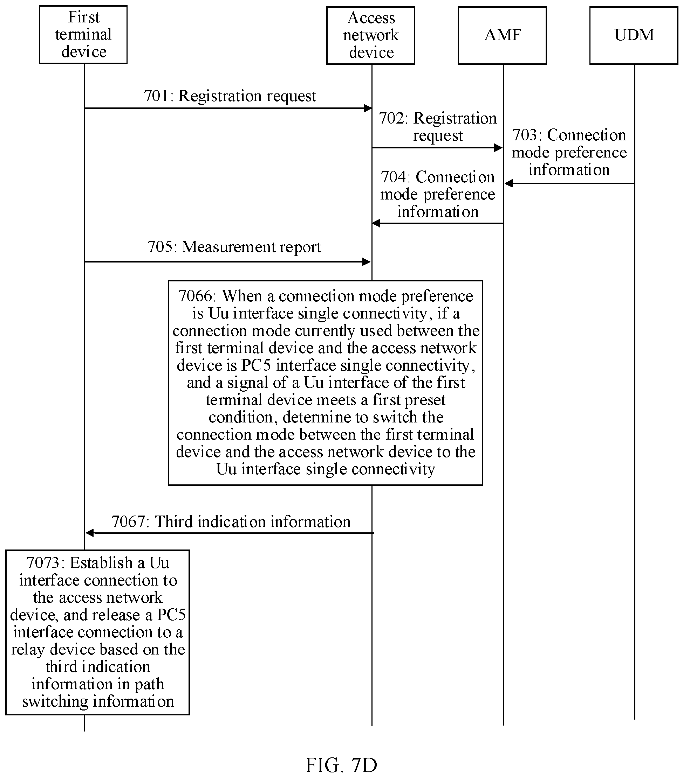

The connection mode preference indicated by the connection mode preference information is Uu interface single connectivity. Based on the embodiment corresponding to the schematic flowchart in FIG. 7A, and a schematic flowchart in FIG. 7D, in a possible implementation, step 706 may include the following steps:
7066: When the connection mode preference is the Uu interface single connectivity, if the connection mode currently used between the first terminal device and the access network device is PCS interface single connectivity, and a signal of the Uu interface of the first terminal device meets a first preset condition, the access network device determines to switch the connection mode between the first terminal device and the access network device to the Uu interface single connectivity.
7067: The access network device sends the path switching information to the first terminal device. The path switching information may include third indication information.

The related supplementary descriptions and technical effects of step 3026 and step 3027 in the foregoing embodiments are also applicable to step 7066 and step 7067 in this embodiment. Details are not described herein again.

Step 707 may include the following step:
7073: The first terminal device establishes a Uu interface connection to the access network device, and releases a PCS interface connection to a relay device based on the third indication information in the path switching information.

The related supplementary descriptions and technical effects of step 6043 in the foregoing embodiments are also applicable to step 7073 in this embodiment. Details are not described herein again.

### Manner 4:

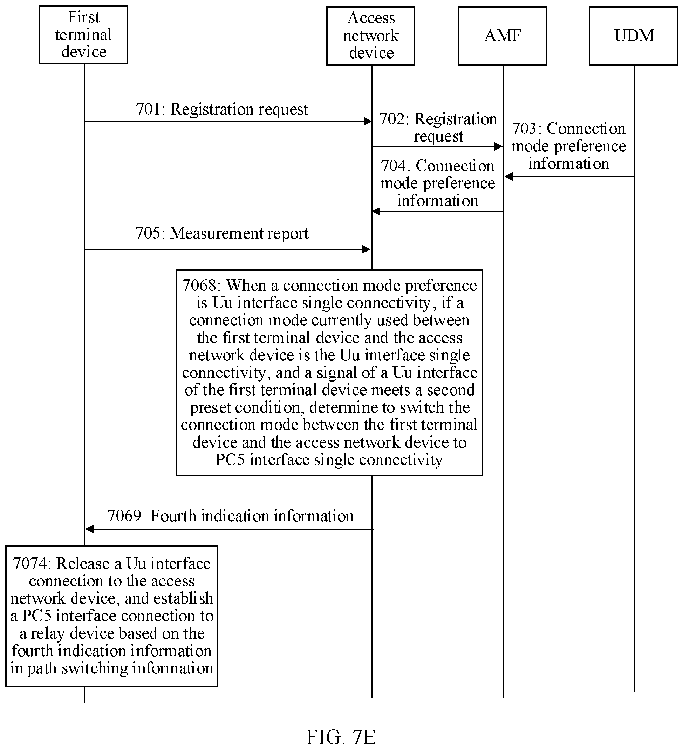

The connection mode preference indicated by the connection mode preference information is Uu interface single connectivity. Based on the embodiment corresponding to the schematic flowchart in FIG. 7A, and a schematic flowchart in FIG. 7E, in a possible implementation, step 706 may include the following steps:
7068: When the connection mode preference is the Uu interface single connectivity, if the connection mode currently used between the first terminal device and the access network device is the Uu interface single connectivity, and a signal of the Uu interface of the first terminal device meets a second preset condition, the access network device determines to switch the connection mode between the first terminal device and the access network device to PCS interface single connectivity.
7069: The access network device sends the path switching information to the first terminal device. The path switching information may include fourth indication information.

The related supplementary descriptions and technical effects of step 3028 and step 3029 in the foregoing embodiments are also applicable to step 7068 and step 7069 in this embodiment. Details are not described herein again.

Step 707 may include the following step:
7074: The first terminal device releases a Uu interface connection to the access network device, and establishes a PCS interface connection to a relay device based on the fourth indication information in the path switching information.

The related supplementary descriptions and technical effects of step 6044 in the foregoing embodiments are also applicable to step 7074 in this embodiment. Details are not described herein again.

The path switching information may alternatively be the target connection mode between the first terminal device and the access network device. In step 707, the first terminal device may switch the connection mode to the target connection mode. For example, if the target connection mode between the first terminal device and the access network device is the Uu interface and PCS interface dual connectivity, the first terminal device switches the connection mode between the first terminal device and the access network device to the Uu interface and PCS interface dual connectivity based on the path switching information. For another example, if the target connection mode between the first terminal device and the access network device is the Uu interface single connectivity, the first terminal device switches the connection mode between the first terminal device and the access network device to the Uu interface single connectivity based on the path switching information. For another example, if the target connection mode between the first terminal device and the access network device is the PCS interface single connectivity, the first terminal device switches the connection mode between the first terminal device and the access network device to the PCS interface single connectivity based on the path switching information.

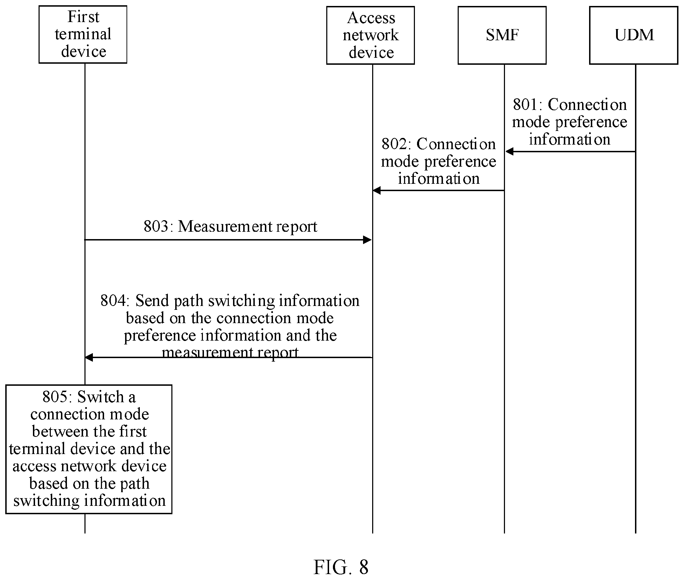

As shown in a schematic flowchart in FIG. 8, in some other embodiments, the connection method may include the following steps:
801: An SMF obtains connection mode preference information of a first terminal device.

The SMF may obtain the connection mode preference information of the first terminal device from a UDM.

In a process in which a relay device establishes a Uu interface connection to an access network device, when the relay device establishes a PDU session with the SMF, the SMF identifies that the first terminal device is being connected to the access network device via the relay device. Then, the SMF may obtain the connection mode preference information of the first terminal device from the UDM.

802: The SMF sends the connection mode preference information to the access network device.

The connection mode preference information indicates that a connection mode preference of the first terminal device is Uu interface and PCS interface dual connectivity; the connection mode preference information indicates that a connection mode of the first terminal device is Uu interface single connectivity; or the connection mode preference information indicates that a connection mode of the first terminal device is PCS interface single connectivity.

Optionally, the connection method further includes the following steps:
803: The first terminal device sends a measurement report to the access network device.

The measurement report may include a signal strength of a PCS interface and/or a signal strength of a Uu interface.
804: The access network device sends path switching information to the first terminal device based on the connection mode preference information and the measurement report.
805: The first terminal device switches the connection mode between the first terminal device and the access network device based on the path switching information.

For implementations of step 804 and step 805, refer to the implementations of step 706 and step 707 in the foregoing embodiments. Details are not described herein again.

In the technical solutions of this embodiment, the SMF can obtain the connection mode preference information of the first terminal device from the UDM, and send the connection mode preference information to the access network device, so that the access network device can send the path switching information to the first terminal device based on the connection mode preference information of the first terminal device.

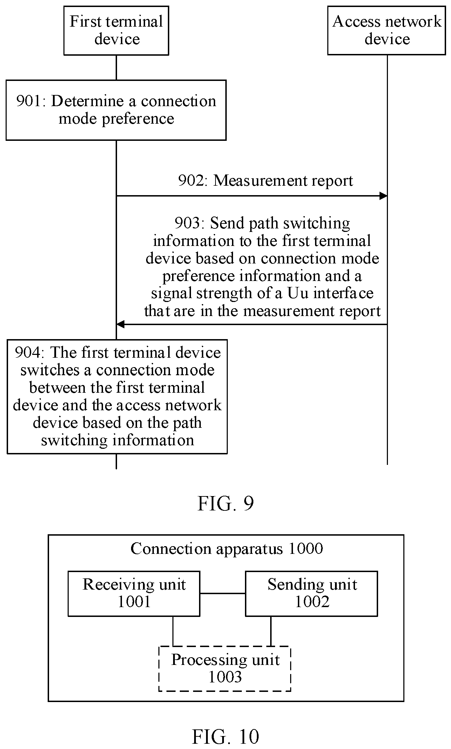

As shown in a schematic flowchart in FIG. 9, the connection method may include the following steps:
901: A first terminal device determines a connection mode preference.

The connection mode preference is Uu interface and PCS interface dual connectivity, Uu interface single connectivity, or PCS interface single connectivity.

The first terminal device may determine the connection mode preference based on one or two of a service scenario and an expected movement track.

For example, if data transmission reliability and fast transmission efficiency needs to be ensured in a service scenario of the first terminal device, the first terminal device may determine that the connection mode preference is the Uu interface and PCS interface dual connectivity.

For another example, if data transmission efficiency needs to be ensured in a service scenario, and most of expected movement tracks of the first terminal device are located within a coverage area of a wireless network, the first terminal device may determine that the connection mode preference is the Uu interface single connectivity.

For another example, if data transmission reliability needs to be preferentially ensured in a service scenario of the first terminal device, the first terminal device may determine that the connection mode preference is the PCS interface single connectivity.

902: The first terminal device sends a measurement report to an access network device.

The measurement report includes connection mode preference information.

The connection mode preference information indicates that the connection mode preference of the first terminal device is the Uu interface and PCS interface dual connectivity, indicates that the connection mode preference of the first terminal device is the Uu interface single connectivity, or indicates that the connection mode preference of the first terminal device is the PCS interface single connectivity.

The measurement report further includes a signal strength of a Uu interface and/or a signal strength of a PCS interface.

Optionally, the measurement report includes the signal strength of the Uu interface. The connection method may further include the following steps:
903: The access network device sends path switching information to the first terminal device based on the connection mode preference information and the signal strength of the Uu interface that are in the measurement report.
904: The first terminal device switches a connection mode between the first terminal device and the access network device based on the path switching information.

For possible implementations of step 903 and step 904, refer to the possible implementations of step 706 and step 707 in the foregoing embodiments. Details are not described herein again.

In this way, in the technical solutions of this embodiment, the first terminal device determines the connection mode preference, and includes the connection mode preference information in the measurement report, so that the access network device can indicate, based on the connection mode preference determined by the first terminal device, the first terminal device to switch the connection mode. Therefore, the connection mode of the first terminal device can better meet a connection requirement of the first terminal device.

The following provides some apparatus embodiments.

FIG. 10 is a schematic diagram of a structure of a connection apparatus. An embodiment of this application further provides a connection apparatus 1000. The connection apparatus 1000 may be an access network device, or may be deployed on an access network device. The connection apparatus 1000 includes a receiving unit 1001 and a sending unit 1002.

The receiving unit 1001 is configured to obtain connection mode preference information of a first terminal device. The connection mode preference information indicates a connection mode preference of the first terminal device.

The sending unit 1002 is configured to send path switching information to the first terminal device based on the connection mode preference information. The path switching information is used to switch a connection mode between the first terminal device and the access network device.

In the technical solutions of this embodiment of this application, the connection apparatus sends the path switching information to the first terminal device based on the connection mode preference information of the first terminal device, and the first terminal device switches a path based on the path switching information. In this way, a connection mode to which the first terminal device switches can better meet a connection requirement of the first terminal device.

In some embodiments, the connection mode preference includes: Uu interface and PCS interface dual connectivity; Uu interface single connectivity; or PCS interface single connectivity.

In some embodiments, in an aspect of sending the path switching information to the first terminal device based on the connection mode preference information, the sending unit 1002 is specifically configured to:
when the connection mode preference is the Uu interface and PCS interface dual connectivity, if the connection mode currently used between the first terminal device and the access network device is the PCS interface single connectivity, and a signal of a Uu interface of the first terminal device meets a first preset condition, determine to switch the connection mode between the first terminal device and the access network device to the Uu interface and PCS interface dual connectivity; and
send the path switching information to the first terminal device. The path switching information includes first indication information, and the first indication information indicates the first terminal device to establish a Uu interface connection to the access network device, and maintain a PCS interface connection to a relay device.

In some embodiments, the shown connection apparatus further includes a processing unit 1003. The processing unit 1003 is configured to determine, based on path support capability information of the first terminal device, that the first terminal device supports the Uu interface and PCS interface dual connectivity.

In some embodiments, in an aspect of sending the path switching information to the first terminal device based on the connection mode preference information, the sending unit 1002 is specifically configured to:
when the connection mode preference is the Uu interface and PCS interface dual connectivity, if the connection mode currently used between the first terminal device and the access network device is the Uu interface and PCS interface dual connectivity, and a signal of a Uu interface of the first terminal device meets a second preset condition, determine to switch the connection mode between the first terminal device and the access network device to the PCS interface single connectivity; and
send the path switching information to the first terminal device. The path switching information includes second indication information, and the second indication information indicates the first terminal device to release a Uu interface connection to the access network device, and maintain a PCS interface connection to a relay device.

In some embodiments, in an aspect of sending the path switching information to the first terminal device based on the connection mode preference information, the sending unit 1002 is specifically configured to:
when the connection mode preference is the Uu interface single connectivity, if the connection mode currently used between the first terminal device and the access network device is the PCS interface single connectivity, and a signal of a Uu interface of the first terminal device meets a first preset condition, determine to switch the connection mode between the first terminal device and the access network device to the Uu interface single connectivity; and
send the path switching information to the first terminal device. The path switching information includes third indication information, and the third indication information indicates the first terminal device to establish a Uu interface connection to the access network device, and release a PCS interface connection to a relay device.

In some embodiments, in an aspect of sending the path switching information to the first terminal device based on the connection mode preference information, the sending unit 1002 is specifically configured to:
when the connection mode preference is the Uu interface single connectivity, if the connection mode currently used between the first terminal device and the access network device is the Uu interface single connectivity, and a signal of a Uu interface of the first terminal device meets a second preset condition, determine to switch the connection mode between the first terminal device and the access network device to the PCS interface single connectivity; and
send the path switching information to the first terminal device. The path switching information includes fourth indication information, and the fourth indication information indicates the first terminal device to establish a PCS interface connection to a relay device, and release a Uu interface connection to the access network device.

In some embodiments, in an aspect of obtaining the connection mode preference information of the first terminal device, the receiving unit 1001 is specifically configured to receive the connection mode preference information from a first network device. The first network device is an access and mobility management function device or a session management device.

In some embodiments, in an aspect of obtaining the connection mode preference information of the first terminal device, the receiving unit 1001 is specifically configured to receive the connection mode preference information from the first terminal device.

Optionally, the connection mode preference information is carried in a measurement report.

It should be understood that related supplementary descriptions and beneficial effects of the connection method in embodiments of this application are also applicable to the connection apparatus 1000 in embodiments of this application. To avoid redundancy, details are not described herein again.

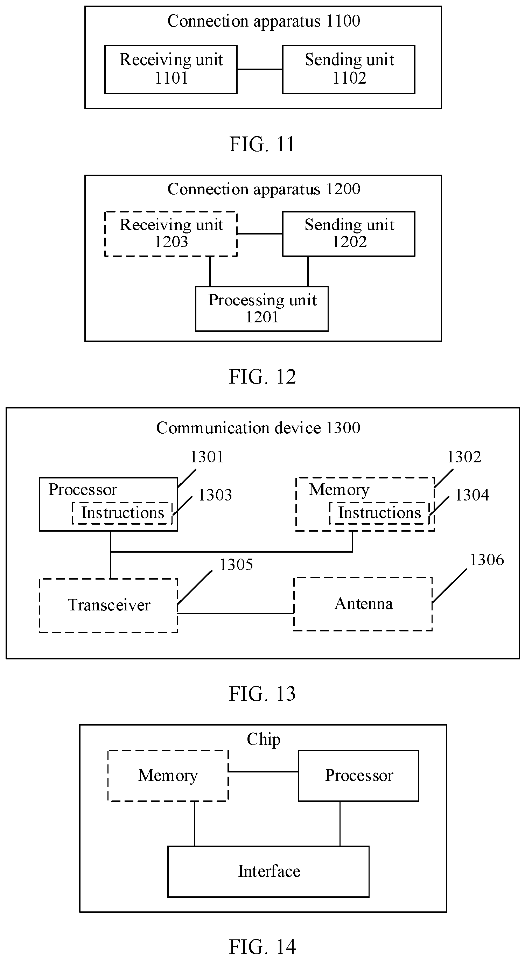

FIG. 11 is a schematic diagram of a structure of a connection apparatus. An embodiment of this application further provides a connection apparatus 1100. The connection apparatus 1100 may be a first network device, or may be deployed on a first network device. The first network device may be a core network device, for example, an AMF or an SMF. This is not limited. The connection apparatus 1100 includes a receiving unit 1101 and a sending unit 1102.

The receiving unit 1101 is configured to obtain connection mode preference information of a first terminal device. The connection mode preference information indicates a connection mode preference of the first terminal device.

The sending unit 1102 is configured to send the connection mode preference information to an access network device.

In this way, the access network device can indicate, based on the connection mode preference information, the first terminal device to switch a connection mode. Therefore, a connection mode to which the first terminal device switches better meets a connection requirement of the first terminal device.

In some embodiments, in an aspect of obtaining the connection mode preference information of the first terminal device, the receiving unit 1101 is specifically configured to:
obtain subscription data of the first terminal device; and obtain the connection mode preference information based on the subscription data of the first terminal device.

In some embodiments, the receiving unit 1101 is further configured to:
receive a registration request from the first terminal device. The registration request includes path support capability information of the first terminal device.

The path support capability information indicates that the first terminal device supports one or more of the following: Uu interface and PCS interface dual connectivity, Uu interface single connectivity, or PCS interface single connectivity.

It should be understood that related supplementary descriptions and beneficial effects of the connection method in embodiments of this application are also applicable to the connection apparatus 1100 in embodiments of this application. To avoid redundancy, details are not described herein again.

FIG. 12 is a schematic diagram of a structure of a connection apparatus. An embodiment of this application further provides a connection apparatus 1200. The connection apparatus 1200 may be a first terminal device, or may be deployed on a first terminal device. The connection apparatus 1200 includes a processing unit 1201 and a sending unit 1202.

The processing unit 1201 is configured to determine a connection mode preference.

The sending unit 1202 is configured to send connection mode preference information to an access network device. The connection mode preference information indicates the connection mode preference of the first terminal device.

In this way, the first terminal device can determine the connection mode preference, and send, to the access network device, the connection mode preference information indicating the connection mode preference, so that the access network device can indicate, based on the connection mode preference determined by the first terminal device, the first terminal device to switch the connection mode. Therefore, a connection mode of the first terminal device can better meet a connection requirement of the first terminal device.

Optionally, the connection mode preference information is carried in a measurement report or a registration request.

In some embodiments, the sending unit 1202 is further configured to:
send the registration request to an access and mobility management function device. The registration request includes path support capability information of the first terminal device.

The path support capability information indicates that the first terminal device supports one or more of the following: Uu interface and PCS interface dual connectivity, Uu interface single connectivity, or PCS interface single connectivity.

In some embodiments, in an aspect of determining the connection mode preference, the processing unit 1201 is specifically configured to determine the connection mode preference based on one or two of a service scenario and an expected movement track.

In some embodiments, the connection apparatus 1200 further includes:
a receiving unit 1203, configured to receive path switching information from the access network device.

The processing unit 1201 is further configured to switch the connection mode between the first terminal device and the access network device based on the path switching information.

The path switching information includes first indication information, and the first indication information indicates the first terminal device to establish a Uu interface connection to the access network device, and maintain a PCS interface connection to a relay device.

Alternatively, the path switching information includes second indication information, and the second indication information indicates the first terminal device to release a Uu interface connection to the access network device, and maintain a PCS interface connection to a relay device.

Alternatively, the path switching information includes third indication information, and the third indication information indicates the first terminal device to establish a Uu interface connection to the access network device, and release a PCS interface connection to a relay device.

Alternatively, the path switching information includes fourth indication information, and the fourth indication information indicates the first terminal device to establish a PCS interface connection to a relay device, and release a Uu interface connection to the access network device.

It should be understood that related supplementary descriptions and beneficial effects of the connection method in embodiments of this application are also applicable to the connection apparatus 1200 in embodiments of this application. To avoid redundancy, details are not described herein again.

Related functions of the first terminal device, the access network device, or the first network device in embodiments of this application may be implemented via a communication device 1300 in FIG. 13. FIG. 13 is a schematic diagram of a structure of the communication device 1300 according to an embodiment of this application. As shown in FIG. 13, the communication device 1300 may include a processor 1301 and a transceiver 1305, and optionally further includes a memory 1302.

The transceiver 1305 may be referred to as a transceiver unit, a transceiver machine, a transceiver circuit, or the like, and is configured to implement a transceiver function. The transceiver 1305 may include a receiver and a transmitter. The receiver may be referred to as a receiver machine, a receiver circuit, a receiving unit, or the like, and is configured to implement a receiving function. The transmitter may be referred to as a transmitter machine, a transmitter circuit, a sending unit, or the like, and is configured to implement a sending function.

The memory 1302 may store a computer program, software code, or instructions 1304. The computer program, the software code, or the instructions 1304 may also be referred to as firmware. The processor 1301 may control a MAC layer and a PHY layer by running a computer program, software code, or instructions 1303 in the processor 1301, or by invoking the computer program, the software code, or the instructions 1304 stored in the memory 1302, to implement a signal transmission method provided in the foregoing embodiments of this application. The processor 1301 may be a central processing unit (central processing unit, CPU), and the memory 1302 may be, for example, a read-only memory (read-only memory, ROM), or a random access memory (random access memory, RAM).

The processor 1301 and the transceiver 1305 that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communication device 1300 may further include an antenna 1306. Modules included in the communication device 1300 are merely examples for description. This is not limited in this application.

As described above, the communication device 1300 in the foregoing embodiments may be a first terminal device, an access network device, or a first network device. However, a scope of the communication device described in this application is not limited thereto, and a structure of the communication device may not be limited in FIG. 13. The communication device may be an independent device or may be a part of a large device. For example, implementation forms of the communication device may be:
(1) an independent integrated circuit IC, a chip, a chip system, or a subsystem; (2) a set including one or more ICs, where optionally, the set of ICs may further include a storage component for storing data and instructions; (3) a module that can be embedded in another device; (4) a receiver machine, an intelligent terminal, a wireless device, a handheld device, a mobile unit, a vehicle-mounted device, a cloud device, an artificial intelligence device, or the like; or (5) others.

For the communication device implemented in the form of the chip or the chip system, refer to a schematic diagram of a structure of a chip shown in FIG. 14. The chip shown in FIG. 14 includes a processor and an interface. There may be one or more processors, and there may be a plurality of interfaces. The interface is configured to receive a signal and transmit a signal. Optionally, the chip or chip system may include a memory. The memory is configured to store program instructions and data that are necessary for the chip or chip system.

Embodiments of this application do not limit the protection scope and applicability of the claims. A person skilled in the art may adaptively change functions and deployments of elements in this application, or omit, replace, or add various processes or components as appropriate without departing from the scope of embodiments of this application.

In an implementation, the communication device 1300 is the access network device in the foregoing method embodiments. The communication device 1300 may implement, via the processor and the transceiver, some or all steps of any method performed by the access network device in embodiments of this application. For example:
The transceiver 1305 may be configured to: obtain connection mode preference information of a first terminal device, where the connection mode preference information indicates a connection mode preference of the first terminal device; and send path switching information to the first terminal device based on the connection mode preference information, where the path switching information is used to switch a connection mode between the first terminal device and the access network device.

In another implementation, the communication device 1300 is the first terminal device in the foregoing method embodiments. The communication device 1300 may implement, via the processor and the transceiver, some or all steps of any method performed by the first terminal device in embodiments of this application. For example:

The processor 1301 is configured to determine a connection mode preference.

The transceiver 1305 may be configured to send connection mode preference information to an access network device. The connection mode preference information indicates the connection mode preference of the first terminal device.

In another implementation, the communication device 1300 is the first network device in the foregoing method embodiments. The communication device 1300 may implement, via the processor and the transceiver, some or all steps of any method performed by the first network device in embodiments of this application. For example:
The transceiver 1305 is configured to: obtain connection mode preference information of a first terminal device, where the connection mode preference information indicates a connection mode preference of the first terminal device; and send the connection mode preference information to an access network device.

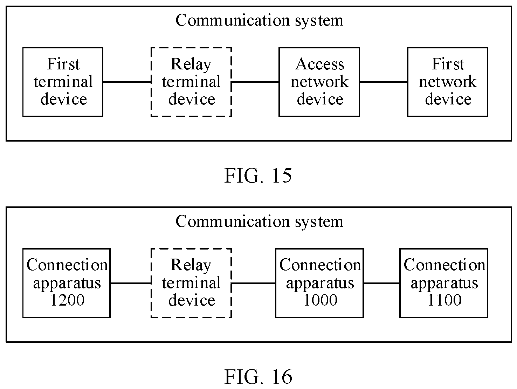

This application further provides a communication system. FIG. 15 is a schematic diagram of an architecture of the communication system. The communication system includes the first terminal device and the access network device according to any one of the foregoing embodiments. Optionally, the communication system may further include the relay device according to any one of the foregoing embodiments. The relay device is connected to the access network device. The relay device may be, for example, a relay terminal device.

Optionally, as shown in FIG. 15, the communication system may further include the first network device according to any one of the foregoing embodiments. The first network device may be a core network device, for example, an AMF or an SMF. This is not limited.

This application further provides another communication system. FIG. 16 is a schematic diagram of an architecture of the communication system. The communication system includes the connection apparatus 1000 in the foregoing embodiment and the connection apparatus 1200 in the foregoing embodiment. Optionally, the communication system may further include the relay device according to any one of the foregoing embodiments. The relay device is connected to an access network device or the connection apparatus 1000. The relay device may be, for example, a relay terminal device.

Optionally, as shown in FIG. 16, the communication system may further include the connection apparatus 1100 in the foregoing embodiment.

This application provides a computer-readable storage medium. The computer-readable storage medium stores computer instructions, and the computer instructions indicate user equipment to perform the connection methods according to any one of the foregoing embodiments.

It should be understood that, the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or removed based on an actual requirement.

The modules in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A connection method, comprising:
obtaining, by an access network device, connection mode preference information of a first terminal device, wherein the connection mode preference information indicates a connection mode preference of the first terminal device; and
sending, by the access network device, path switching information to the first terminal device based on the connection mode preference information, wherein the path switching information is used to switch a connection mode between the first terminal device and the access network device.

2. The method according to claim 1, wherein the connection mode preference comprises:
Uu interface and PCS interface dual connectivity;
Uu interface single connectivity; or
PCS interface single connectivity.

3. The method according to claim 1 or 2, wherein the sending, by the access network device, path switching information to the first terminal device based on the connection mode preference information comprises:
when the connection mode preference is a Uu interface and PCS interface dual connectivity, if the connection mode currently used between the first terminal device and the access network device is a PCS interface single connectivity, and a signal of a Uu interface of the first terminal device meets a first preset condition, determining, by the access network device, to switch the connection mode between the first terminal device and the access network device to the Uu interface and PCS interface dual connectivity; and
sending, by the access network device, the path switching information to the first terminal device, wherein the path switching information comprises first indication information, and the first indication information indicates the first terminal device to establish a Uu interface connection to the access network device, and maintain a PCS interface connection to a relay device.

4. The method according to claim 3, wherein before the determining, by the access network device, to switch the connection mode between the first terminal device and the access network device to the Uu interface and PCS interface dual connectivity, the method further comprises:
determining, by the access network device based on path support capability information of the first terminal device, that the first terminal device supports the Uu interface and PCS interface dual connectivity.

5. The method according to claim 1 or 2, wherein the sending, by the access network device, path switching information to the first terminal device based on the connection mode preference information comprises:
when the connection mode preference is the Uu interface and PCS interface dual connectivity, if the connection mode currently used between the first terminal device and the access network device is the Uu interface and PCS interface dual connectivity, and a signal of a Uu interface of the first terminal device meets a second preset condition, determining, by the access network device, to switch the connection mode between the first terminal device and the access network device to the PCS interface single connectivity; and
sending, by the access network device, the path switching information to the first terminal device, wherein the path switching information comprises second indication information, and the second indication information indicates the first terminal device to release a Uu interface connection to the access network device, and maintain a PCS interface connection to a relay device.

6. The method according to claim 1 or 2, wherein the sending, by the access network device, path switching information to the first terminal device based on the connection mode preference information comprises:
when the connection mode preference is the Uu interface single connectivity, if the connection mode currently used between the first terminal device and the access network device is the PCS interface single connectivity, and a signal of a Uu interface of the first terminal device meets a first preset condition, determining, by the access network device, to switch the connection mode between the first terminal device and the access network device to the Uu interface single connectivity; and
sending, by the access network device, the path switching information to the first terminal device, wherein the path switching information comprises third indication information, and the third indication information indicates the first terminal device to establish a Uu interface connection to the access network device, and release a PCS interface connection to a relay device.

7. The method according to claim 1 or 2, wherein the sending, by the access network device, path switching information to the first terminal device based on the connection mode preference information comprises:
when the connection mode preference is the Uu interface single connectivity, if the connection mode currently used between the first terminal device and the access network device is the Uu interface single connectivity, and a signal of a Uu interface of the first terminal device does not meet a first preset condition, determining, by the access network device, to switch the connection mode between the first terminal device and the access network device to the PCS interface single connectivity; and
sending, by the access network device, the path switching information to the first terminal device, wherein the path switching information comprises fourth indication information, and the fourth indication information indicates the first terminal device to establish a PCS interface connection to a relay device, and release a Uu interface connection to the access network device.

8. The method according to any one of claims 1 to 7, wherein the obtaining, by an access network device, connection mode preference information of a first terminal device comprises:
receiving, by the access network device, the connection mode preference information from a first network device, wherein the first network device is an access and mobility management function device or a session management device; or
receiving, by the access network device, the connection mode preference information from the first terminal device.

9. A connection method, comprising:
obtaining, by a first network device, connection mode preference information of a first terminal device, wherein the connection mode preference information indicates a connection mode preference of the first terminal device; and
sending, by the first network device, the connection mode preference information to an access network device.

10. The method according to claim 9, wherein the obtaining, by a first network device, connection mode preference information of a first terminal device comprises:
obtaining, by the first network device, subscription data of the first terminal device; and
obtaining, by the first network device, the connection mode preference information based on the subscription data of the first terminal device.

11. The method according to claim 9 or 10, wherein the first network device is an access and mobility management function device, and before the obtaining, by a first network device, connection mode preference information of a first terminal device, the method further comprises:
receiving, by the access and mobility management function device, a registration request from the first terminal device, wherein the registration request comprises path support capability information of the first terminal device, wherein
the path support capability information indicates that the first terminal device supports one or more of the following: Uu interface and PCS interface dual connectivity, Uu interface single connectivity, or PCS interface single connectivity.

12. A connection method, comprising:
determining, by a first terminal device, a connection mode preference; and
sending, by the first terminal device, connection mode preference information to an access network device, wherein the connection mode preference information indicates the connection mode preference of the first terminal device.

13. The method according to claim 12, wherein the connection mode preference information is carried in a measurement report.

14. The method according to claim 12 or 13, wherein the method further comprises:
sending, by the first terminal device, a registration request to an access and mobility management function device, wherein the registration request comprises path support capability information of the first terminal device, wherein
the path support capability information indicates that the first terminal device supports one or more of the following: Uu interface and PCS interface dual connectivity, Uu interface single connectivity, or PCS interface single connectivity.

15. The method according to any one of claims 12 to 14, wherein the determining, by a first terminal device, a connection mode preference comprises:
determining, by the first terminal device, the connection mode preference based on one or two of a service scenario and an expected movement track.

16. The method according to any one of claims 12 to 15, wherein the method further comprises:
receiving, by the first terminal device, path switching information from the access network device; and
switching, by the first terminal device, a connection mode between the first terminal device and the access network device based on the path switching information, wherein
the path switching information comprises first indication information, and the first indication information indicates the first terminal device to establish a Uu interface connection to the access network device, and maintain a PCS interface connection to a relay device;
the path switching information comprises second indication information, and the second indication information indicates the first terminal device to release a Uu interface connection to the access network device, and maintain a PCS interface connection to a relay device;
the path switching information comprises third indication information, and the third indication information indicates the first terminal device to establish a Uu interface connection to the access network device, and release a PCS interface connection to a relay device; or
the path switching information comprises fourth indication information, and the fourth indication information indicates the first terminal device to establish a PCS interface connection to a relay device, and release a Uu interface connection to the access network device.

17. A connection apparatus, comprising:
a receiving unit, configured to obtain connection mode preference information of a first terminal device, wherein the connection mode preference information indicates a connection mode preference of the first terminal device; and
a sending unit, configured to send path switching information to the first terminal device based on the connection mode preference information, wherein the path switching information is used to switch a connection mode between the first terminal device and the access network device.

18. The apparatus according to claim 17, wherein the connection mode preference comprises:
Uu interface and PCS interface dual connectivity;
Uu interface single connectivity; or
PCS interface single connectivity.

19. The apparatus according to claim 17 or 18, wherein
in an aspect of sending the path switching information to the first terminal device based on the connection mode preference information, the sending unit is specifically configured to:
when the connection mode preference is the Uu interface and PCS interface dual connectivity, if the connection mode currently used between the first terminal device and the access network device is the PCS interface single connectivity, and a signal of a Uu interface of the first terminal device meets a first preset condition, determine to switch the connection mode between the first terminal device and the access network device to the Uu interface and PCS interface dual connectivity; and
send the path switching information to the first terminal device, wherein the path switching information comprises first indication information, and the first indication information indicates the first terminal device to establish a Uu interface connection to the access network device, and maintain a PCS interface connection to a relay device.

20. The apparatus according to claim 19, wherein the connection apparatus further comprises a processor, and the processor is configured to determine, based on path support capability information of the first terminal device, that the first terminal device supports the Uu interface and PCS interface dual connectivity.

21. The apparatus according to claim 17 or 18, wherein
in an aspect of sending the path switching information to the first terminal device based on the connection mode preference information, the sending unit is specifically configured to:
when the connection mode preference is the Uu interface and PCS interface dual connectivity, if the connection mode currently used between the first terminal device and the access network device is the Uu interface and PCS interface dual connectivity, and a signal of a Uu interface of the first terminal device does not meet a first preset condition, determine to switch the connection mode between the first terminal device and the access network device to the PCS interface single connectivity; and
send the path switching information to the first terminal device, wherein the path switching information comprises second indication information, and the second indication information indicates the first terminal device to release a Uu interface connection to the access network device, and maintain a PCS interface connection to a relay device.

22. The apparatus according to claim 17 or 18, wherein
in an aspect of sending the path switching information to the first terminal device based on the connection mode preference information, the sending unit is specifically configured to:
when the connection mode preference is the Uu interface single connectivity, if the connection mode currently used between the first terminal device and the access network device is the PCS interface single connectivity, and a signal of a Uu interface of the first terminal device meets a first preset condition, determine to switch the connection mode between the first terminal device and the access network device to the Uu interface single connectivity; and
send the path switching information to the first terminal device, wherein the path switching information comprises third indication information, and the third indication information indicates the first terminal device to establish a Uu interface connection to the access network device, and release a PCS interface connection to a relay device.

23. The apparatus according to claim 17 or 18, wherein
in an aspect of sending the path switching information to the first terminal device based on the connection mode preference information, the sending unit is specifically configured to:
when the connection mode preference is the Uu interface single connectivity, if the connection mode currently used between the first terminal device and the access network device is the Uu interface single connectivity, and a signal of a Uu interface of the first terminal device does not meet a first preset condition, determine to switch the connection mode between the first terminal device and the access network device to the PCS interface single connectivity; and
send the path switching information to the first terminal device, wherein the path switching information comprises fourth indication information, and the fourth indication information indicates the first terminal device to establish a PCS interface connection to a relay device, and release a Uu interface connection to the access network device.

24. The apparatus according to any one of claims 17 to 23, wherein in an aspect of obtaining the connection mode preference information of the first terminal device, the receiving unit is specifically configured to:
receive the connection mode preference information from a first network device, wherein the first network device is an access and mobility management function device or a session management device; or
receive the connection mode preference information from the first terminal device.

25. A connection apparatus, comprising:
a receiving unit, configured to obtain connection mode preference information of a first terminal device, wherein the connection mode preference information indicates a connection mode preference of the first terminal device; and
a sending unit, configured to send the connection mode preference information to an access network device.

26. The apparatus according to claim 25, wherein in an aspect of obtaining the connection mode preference information of the first terminal device, the receiving unit is specifically configured to:
obtain subscription data of the first terminal device; and
obtain the connection mode preference information based on the subscription data of the first terminal device.

27. The apparatus according to claim 25 or 26, wherein the receiving unit is further configured to:
receive a registration request from the first terminal device, wherein the registration request comprises path support capability information of the first terminal device, and the path support capability information indicates that the first terminal device supports Uu interface and PCS interface dual connectivity, or indicates that the first terminal device supports one of Uu interface single connectivity or PCS interface single connectivity.

28. A connection apparatus, comprising:
a processing unit, configured to determine a connection mode preference; and
a sending unit, configured to send connection mode preference information to an access network device, wherein the connection mode preference information indicates the connection mode preference of a first terminal device.

29. The apparatus according to claim 28, wherein the connection mode preference information is carried in a measurement report or a registration request.

30. The apparatus according to claim 28 or 29, wherein the sending unit is further configured to:
send the registration request to an access and mobility management function device, wherein the registration request comprises path support capability information of the first terminal device, wherein
the path support capability information indicates that the first terminal device supports one or more of the following: Uu interface and PCS interface dual connectivity, Uu interface single connectivity, or PCS interface single connectivity.

31. The apparatus according to any one of claims 28 to 30, wherein in an aspect of determining the connection mode preference, the processing unit is specifically configured to:
determine the connection mode preference based on one or two of a service scenario and an expected movement track.

32. The apparatus according to any one of claims 28 to 31, wherein the apparatus further comprises:
a receiving unit, configured to receive path switching information from the access network device, wherein
the processing unit is further configured to switch a connection mode between the first terminal device and the access network device based on the path switching information, wherein
the path switching information comprises first indication information, and the first indication information indicates the first terminal device to establish a Uu interface connection to the access network device, and maintain a PCS interface connection to a relay device;
the path switching information comprises second indication information, and the second indication information indicates the first terminal device to release a Uu interface connection to the access network device, and maintain a PCS interface connection to a relay device;
the path switching information comprises third indication information, and the third indication information indicates the first terminal device to establish a Uu interface connection to the access network device, and release a PCS interface connection to a relay device; or
the path switching information comprises fourth indication information, and the fourth indication information indicates the first terminal device to establish a PCS interface connection to a relay device, and release a Uu interface connection to the access network device.

33. A communication device, comprising a processor, wherein the processor is coupled to a memory, and the memory is configured to store computer instructions; and the processor executes the computer instructions, to enable the communication device to perform the method according to any one of claims 1 to 16.

34. A communication system, wherein the system comprises the connection apparatus according to any one of claims 17 to 24, the connection apparatus according to any one of claims 25 to 27, and the connection apparatus according to any one of claims 28 to 32.

35. A computer-readable storage medium, wherein the computer-readable storage medium stores computer instructions; and the computer instructions instruct a communication device to perform the method according to any one of claims 1 to 16.

36. A chip, comprising a processor and an interface, and configured to execute a computer program or instructions stored in a memory, to perform the method according to any one of claims 1 to 16.
